# EUROPEAN PATENT SPECIFICATION

(11) **EP 3 634 881 B1**
(45) Date of publication and mention of the grant of the patent: **03.04.2024**
(21) Application number: 18801475.7
(22) Date of filing: 15.05.2018
(51) Int. Cl.: B65D 81/38, B65D 19/38, B29C 65/00

(54) **PALLET COVER COMPRISING TEMPERATURE-CONTROL MEMBERS**
PALETTENABDECKUNG MIT TEMPERATURSTEUERELEMENTEN
PROTECTION DE PALETTE COMPRENANT DES ÉLÉMENTS DE RÉGULATION DE TEMPÉRATURE

(30) Priority: 15.05.2017 US 201715595671
(43) Date of publication of application: 15.04.2020
(73) Proprietor: Cold Chain Technologies, LLC, Franklin, MA 02038 (US)
(72) Inventor: LONGLEY, Amanda, Hudson MA 01749 (US); KAISER, Geoffrey, Westborough MA 01581 (US); CHASTEEN, James, Robert, Grosse Pointe Farms MI 48236 (US); PANSE, Shreyas, S., Seattle WA 98109 (US); FORMATO, Richard, M., Grafton MA 01519 (US)
(74) Representative: Braeuning Schubert Patentanwälte GbR
(86) International application number: PCT/US2018/032828
(87) International publication number: WO 2018/213348

(56) References cited:
- US-A- 3 950 789
- US-A- 4 311 022
- US-A1- 2013 289 680
- US-A1- 2014 311 170
- US-A1- 2015 276 297
- US-A1- 2017 096 283
- US-A1- 2017 096 283

## Description

### BACKGROUND OF THE INVENTION

The present invention relates generally to pallet covers and relates more particularly to pallet covers that include one or more temperature-control members.

Pallet covers that are used to help maintain pallet-sized loads of temperature-sensitive materials, such as biological and/or pharmaceutical products, within a desired temperature range for a desired period of time are well-known. Examples of such pallet covers, also sometimes referred to as "pallet blankets," are discussed below.

In U.S. Patent No. 8,250,835 B2, inventor Kenneally, which issued August 28, 2012, there is disclosed an airtight cover assembly that includes a side panel folded around goods on a pallet presenting top and bottom opening, a top panel with a plurality of pouches positioned on an inside surface above a vented rigid plate, and a bottom panel enclosing the pallet. Hook and loop closures secure the panel assembly. Panel inner and outer surfaces of a polyvinyl chloride material bonded to an aluminum laminate enclose multiple layers of foam.

In U.S. Patent No. 6,482,332, inventor Malach, which issued November 19, 2002, there is disclosed a phase change material that comprises 1-99.5% by weight polyol, wherein the polyol is selected from the group consisting of 1,4 butanediol and 1,6 hexanediol, 0.5-99% by weight water, and an amount of a nucleating agent sufficient to reduce super cooling of the phase change formulation. The phase change material may be placed in blankets made up of pouches of phase change material. The blankets may also be thin, flat sheets using permeable mats. Blankets of phase change material may be used to enclose entire pallets of product.

In U.S. Patent Application Publication No. US 2013/0062355 A1, inventor Shulman, which was published March 14, 2013, there are disclosed packaging and storing assemblies having phase change materials and methods of using the packaging and storage assemblies. The packaging can have a temperature barrier layer and can be used to insulate a trailer (e.g., in walls of trailer or liner inside trailer). The packaging can be in the form of reusable blankets to cover/wrap pallets or as hanging curtains/separators in a storage unit or trailer.

In U.S. Patent Application Publication No. US 2008/0066490 A1, inventor Santeler, which was published March 20, 2008, there is disclosed a compartmentalized refrigerant wrap. More specifically, according to the subject patent application publication, there is disclosed an elongated sheet having repeating compartments and intermittent sections placed after any repeating compartment. The repeating compartments are closed membranes encasing refrigerant therein. Alternatively, the repeating compartments may be disposed with pockets for releasably retaining the refrigerant. The intermittent sections are flat in cross section and provide holes along its sides for creating a passageway therethrough. The holes may be strengthened using a grommet or the like. In use, one elongate sheet is secured to other elongated sheets in any various end-to-end and/or side-to-side combinations for creating a modular blanket of refrigerant. The sheets are secured to one another by hooks or other known means in which holes in one sheet are connected to various holes in another sheet. The refrigerant blanket may then be placed around the exterior of a large quantity of perishable goods for maintaining the temperature of the sensitive goods.

In PCT International Publication No. WO 2014/070167 A1, which was published May 8, 2014, there is disclosed a thermal stabilization shipping system that comprises a pallet to underlie a palletized load and a blanket dimensioned to drape over a top of the palletized load and reach down to the pallet. The blanket has compartments containing a phase change material.

Other documents that may be of interest include the following: U.S. Patent No. 7,919,163 B2, inventor Romero, issued April 5, 2011; U.S. Patent No. 6,478,061 B2, inventor Haberkorn, issued November 12, 2002; U.S. Patent No. 5,906,290, inventor Haberkorn, issued May 25, 1999; U.S. Patent Application Publication No. US 2013/0015192 A1, inventors Seagle et al., published January 17, 2013; U.S. Patent Application Publication No. US 2013/0015191 A1, inventors Seagle et al., published January 17, 2013; U.S. Patent Application Publication No. US 2010/0037563 A1, inventor Luyten, published February 18, 2010; UK Patent No. GB 2418413 B, published March 19, 2008; and German Gebrauchsmuster No. DE 8801345 U1, published March 31, 1988.

Furthermore, in U.S. Patent Application No. US 2017/096283 A1, inventors Longley et al., published April 6, 2017, there is disclosed a pallet cover suitable for use in covering at least a portion of a payload on a pallet and a kit for use in making the pallet cover. In one embodiment, the pallet cover includes a top wall, a front wall, a rear wall, a left side wall, and a right side wall, wherein the walls are detachably joined to one another. Each of the top wall, the front wall, the rear wall, the left side wall, and the right side wall includes a first fabric sheet and a second fabric sheet, the first and second fabric sheets being joined together to form a plurality of pockets. Each pocket may removably receive a temperature-control member containing a phase-change material. At least one of the top wall, the front wall, the rear wall, the left side wall and the right side wall includes a plurality of detachably joined portions.

### SUMMARY OF THE INVENTION

It is an object of the present invention to provide a novel pallet cover suitable for use in covering at least a portion of a payload on a pallet.

Therefore, according to claim 1 there is provided a pallet cover suitable for use in covering at least a portion of a payload on a pallet, the pallet cover comprising (a) a top wall; (b) a front wall; (c) a rear wall; (d) a left side wall; and (e) a right side wall; (f) wherein at least one of said top wall, said front wall, said rear wall, said left side wall, and said right side wall comprises a plurality of pockets capable of receiving a temperature-control member, wherein at least one of said top wall, said front wall, said rear wall, said left side wall, and said right side wall further comprises a first type of temperature-control member disposed in a first pocket of said plurality of pockets and a second type of temperature-control member disposed in a second pocket of said plurality of pockets, wherein the first type of temperature-control member comprises a first plurality of pouches containing phase-change material, the first plurality of pouches extending substantially across the first pocket, and wherein the second type of temperature-control member comprises a second plurality of pouches each of the second plurality of pouches containing phase-change material, at least some of the second plurality of pouches being separated from one another within the second pocket by one or more spacers, the one or more spacers being one or more pieces of insulation. Further aspects of the invention are set forth in the appended dependent claims.

Additional objects, as well as aspects, features and advantages, of the present invention will be set forth in part in the description which follows, and in part will be obvious from the description or may be learned by practice of the invention. In the description, reference is made to the accompanying drawings which form a part thereof and in which is shown by way of illustration various embodiments for practicing the invention. The embodiments will be described in sufficient detail to enable those skilled in the art to practice the invention, and it is to be understood that other embodiments may be utilized and that structural changes may be made without departing from the scope of the invention. The following detailed description is, therefore, not to be taken in a limiting sense.

### BRIEF DESCRIPTION OF THE DRAWINGS

The accompanying drawings, which are hereby incorporated into and constitute a part of this specification, illustrate various embodiments of the invention and, together with the description, serve to explain the principles of the invention. These drawings are not necessarily drawn to scale, and certain components may have undersized and/or oversized dimensions for purposes of explication. In the drawings wherein like reference numerals represent like parts:
Figs. 1(a) through 1(c) are perspective, front, and partly exploded perspective views, respectively, of a first pallet cover, the pallet cover being shown in Figs. 1(a) and 1(b) covering a payload on a pallet;
Fig. 1(d) is an enlarged, partly exploded, top view of a first alternative top wall for use in the pallet cover of Fig. 1;
Figs. 2(a) through 2(g) are enlarged fragmentary section, enlarged rear, enlarged front, enlarged top, enlarged fragmentary left side, enlarged fragmentary right side, and enlarged partly exploded rear views, respectively, of the front wall of the pallet cover shown in Figs. 1(a) through 1(c);
Figs. 3(a) and 3(b) are front and enlarged section views of one of the temperature-control members shown in Fig. 2(a);
Figs. 4(a) through 4(g) are enlarged fragmentary section, enlarged rear, enlarged front, enlarged top, enlarged fragmentary right side, enlarged fragmentary left side, and enlarged partly exploded rear views, respectively, of the left wall of the pallet cover shown in Figs. 1(a) through 1(c);
Figs. 5(a) through 5(d) are enlarged top, enlarged bottom, enlarged end, and enlarged partly exploded top views, respectively, of the top wall of the pallet cover shown in Figs. 1(a) through 1(c), the top wall being shown in Fig. 5(c) with the ends of the inner fabric sheet slightly bent;
Fig. 6 is a simplified perspective view of a second alternative top wall for use in the pallet cover of Fig. 1;
Fig. 7 is a partly exploded perspective view of a second pallet cover;
Fig. 8 is an enlarged fragmentary section view of the front wall shown in Fig. 7;
Fig. 9 is a partly exploded perspective view of a third pallet cover;
Fig. 10 is a partly exploded perspective view of a fourth pallet cover;
Fig. 11 is a partly exploded perspective view of a fifth pallet cover, the fabric sheets of the pallet cover not being shown to reveal the internal components of the pallet cover, the pallet cover being shown in combination with a payload on a pallet;
Fig. 12 is a partly exploded perspective view of an embodiment of a pallet cover constructed according to the teachings of the present invention;
Figs. 13(a) through 13(e) are enlarged top, enlarged bottom, partly exploded perspective, partly exploded side, and partly exploded end views, respectively, of the first assembly of Fig. 12, wherein Figs. 13(a) and 13(b) show the first assembly in an unfolded state and wherein Figs. 13(c) through 13(e) show various components of the first assembly prior to their assembly;
Figs. 14(a) and 14(b) are enlarged partly exploded top and side views, respectively, of one of the first plurality of temperature-control members shown in Fig. 13(c);
Figs. 15(a) and 15(b) are enlarged partly exploded top and side views, respectively, of one of the second plurality of temperature-control members shown in Fig. 13(c);
Fig. 16 is a schematic diagram illustrating the placement of phase-change material and insulation in the first assembly of Fig. 12, the first assembly being shown in an unfolded state;
Figs. 17(a) through 17(e) are enlarged top, enlarged bottom, partly exploded perspective, partly exploded side, and partly exploded end views, respectively, of the second assembly of Fig. 12, wherein Figs. 17(a) and 17(b) show the second assembly in an unfolded state and wherein Figs. 17(c) through 17(e) show various components of the second assembly prior to their assembly;
Figs. 18(a) and 18(b) are enlarged partly exploded top and side views, respectively, of one of the first plurality of temperature-control members shown in Fig. 17(c);
Figs. 19(a) and 19(b) are enlarged partly exploded top and side views, respectively, of one of the second plurality of temperature-control members shown in Fig. 17(c); and
Fig. 20 is a schematic diagram illustrating the placement of phase-change material and insulation in the second assembly of Fig. 12, the second assembly being shown in an unfolded state.

### DETAILED DESCRIPTION OF THE INVENTION

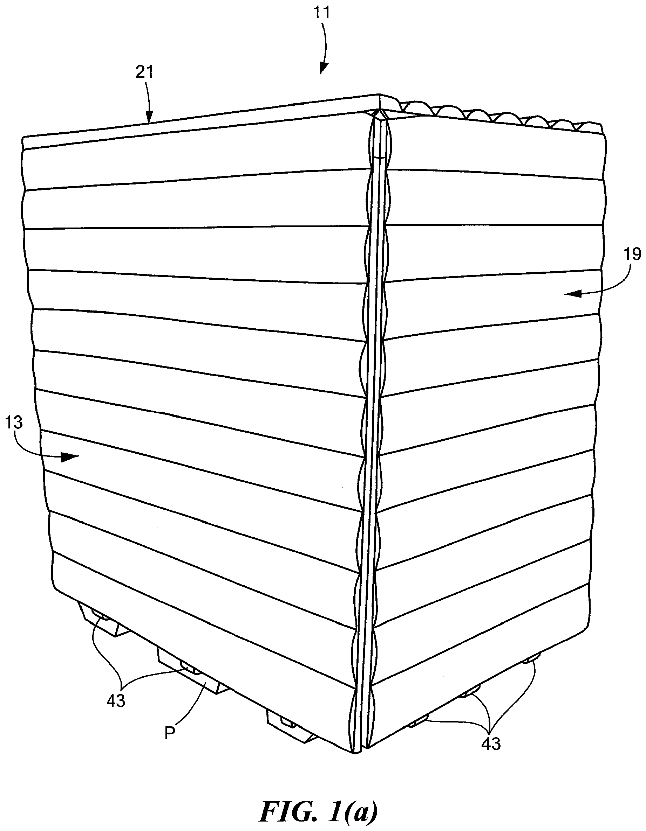

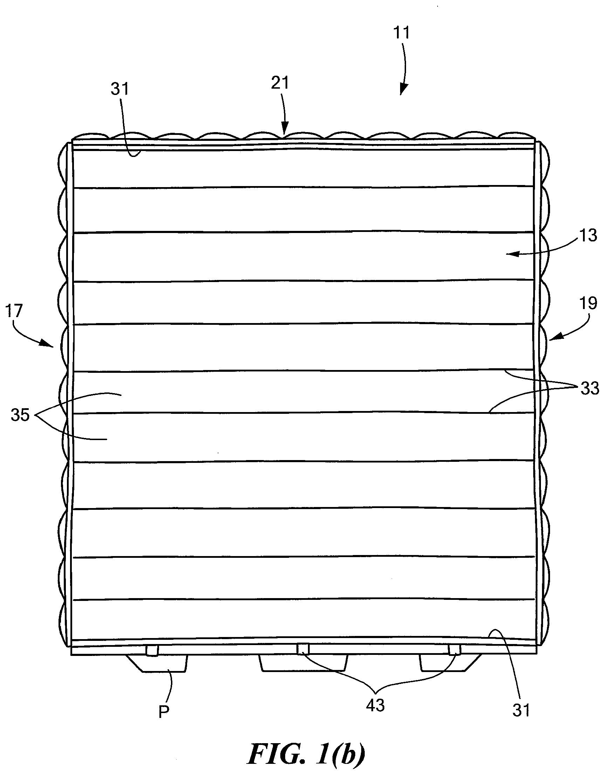

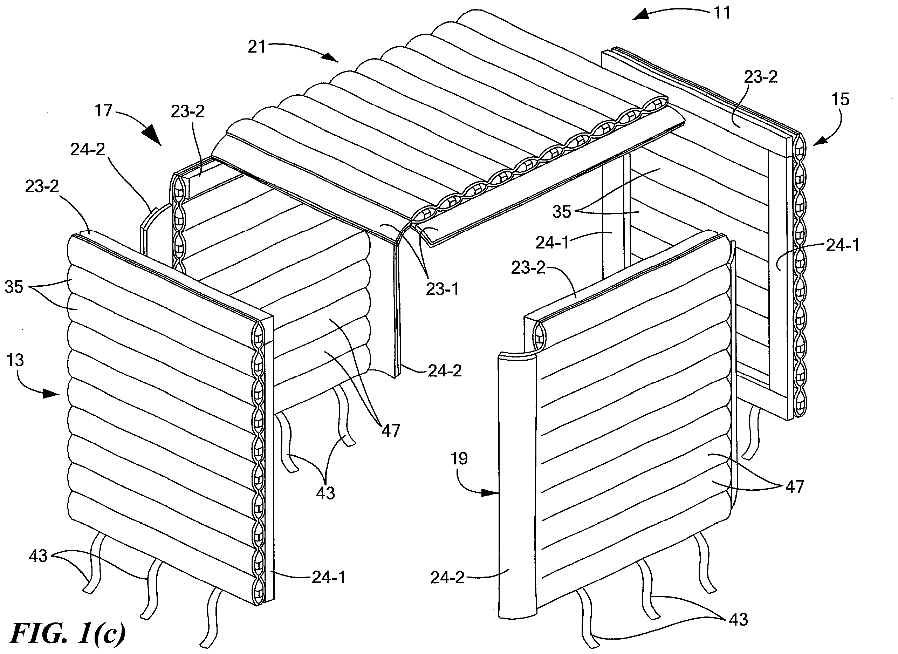

Referring now to Figs. 1(a), 1(b), and 1(c), there are shown various views of a first pallet cover that may be used to help maintain a pallet-sized load of temperature-sensitive materials within a desired temperature range for a desired period of time, the pallet cover being constructed according to the present invention and being represented generally by reference numeral 11. For clarity, certain details of pallet cover 11 that are discussed elsewhere in this application or that are not critical to an understanding of the disclosure may not be shown in one or more of Figs. 1(a) through 1(c) or may be shown therein in a simplified manner.

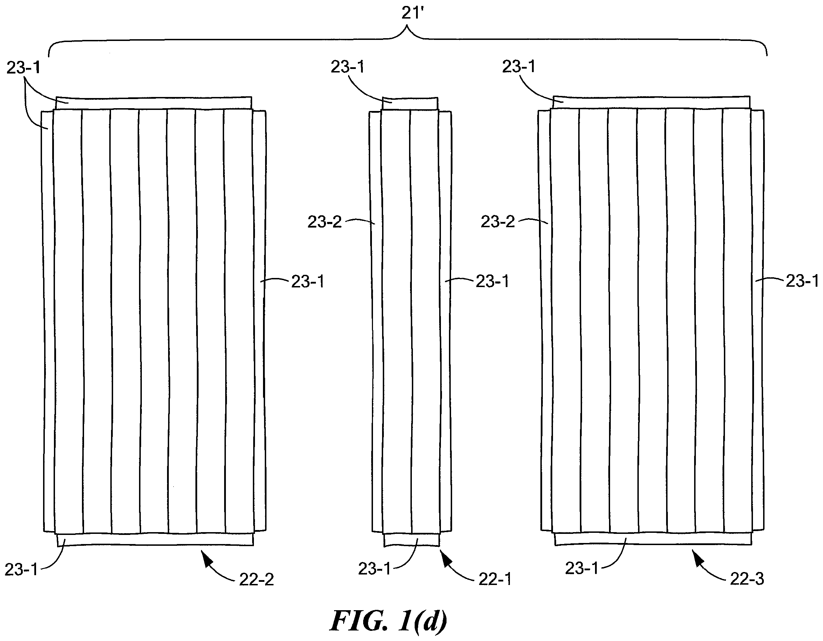

Pallet cover 11 may comprise a front wall 13, a rear wall 15, a left wall 17, a right wall 19, and a top wall 21. Front wall 13, rear wall 15, left wall 17, right wall 19, and top wall 21 may be appropriately dimensioned to cover substantially the entire front, rear, left side, right side, and top, respectively, of a pallet-sized payload. Examples of a pallet-sized payload include, but are not limited to, a 48 inch (121.92 cm) x 40 inch (101.6 cm) x 48 inch (121.92 cm) payload, a 48 inch (121.92 cm) x 40 inch (101.6 cm) x 40 inch (101.6 cm) payload, and a 48 inch (121.92 cm) x 40 inch (101.6 cm) x 59 inch (149.86 cm) payload. Alternatively, it should be understood that, if desired, one or more of front wall 13, rear wall 15, left wall 17, right wall 19 and top wall 21 may be dimensioned to cover only a portion of a pallet-sized payload. For example, front wall 13, rear wall 15, left wall 17, right wall 19 and top wall 21 may be dimensioned to cover only a top portion of a payload, with a bottom portion of the payload being left uncovered. Alternatively, if desired, one or more of front wall 13, rear wall 15, left wall 17, and right wall 19 may be constructed to have an adjustable length, for example, by being made of two or more detachably joinable portions (e.g., a 40-inch (101.6 cm) long portion and a 20-inch (50.8 cm) long portion that may be used alternatively to form a 40-inch (101.6 cm) wall portion or a 20-inch (50.8 cm) wall portion, respectively, or that may be used in combination to form a 60-inch (152.4 cm) wall portion) or by having a releasable securing mechanism to permit a wall to be folded and secured to itself or to another wall. Moreover, as can be seen in Fig. 1(d), an alternative example of top wall 21, namely, top wall 21', may be adjustable in length and/or width, for example, by being made of a plurality of detachably joinable portions (e.g., one or more intermediate portions 22-1 detachably joinable between end portions 22-2 and 22-3).

Referring back now to Figs. 1(a) through 1(c), top wall 21 may be detachably joined to each of front wall 13, rear wall 15, left wall 17, and right wall 19 using suitable releasable fasteners 23-1 and 23-2, such as strips of VELCRO complementary hook and loop fasteners, zippers, buttons, snaps, releasable adhesive tapes, and the like, located on adjacent edges of top wall 21, front wall 13, rear wall 15, left wall 17, and right wall 19. For example, one type of hook/loop fastener may be employed in fastener 23-1, which may be located along the edges of top wall 21, and a complementary type of hook/loop fastener may be employed in fastener 23-2, which may be located on adjacent edges of each of front wall 13, rear wall 15, left wall 17, and right wall 19. In like fashion, each of front wall 13, rear wall 15, left wall 17, and right wall 19 may be detachably joined to its two neighboring side walls using suitable releasable fasteners 24-1 and 24-2, such as VELCRO complementary hook and loop fasteners, zippers, buttons, snaps, releasable adhesive tapes, and the like, located on adjacent edges of front wall 13, rear wall 15, left wall 17, and right wall 19. For example, one type of hook/loop fastener may be employed in fastener 24-1, which may be located along the left and right sides of front wall 13 and rear wall 15, and a complementary type of hook/loop fastener may be employed in fastener 24-2, which may be located along the left and right edges of left wall 17 and right wall 19. Notwithstanding the above, if desired, top wall 21 may be permanently secured to each of front wall 13, rear wall 15, left wall 17, and right wall 19 using a suitable permanent fastening mechanism, such as rivets, stitches, a permanent adhesive, and the like, and each of front wall 13, rear wall 15, left wall 17, and right wall 19 may be permanently secured to its two neighboring side walls using a suitable permanent fastening mechanism, such as rivets, stitches, a permanent adhesive, and the like. Moreover, if desired, one or more of front wall 13, rear wall 15, left wall 17, right wall 19 and top wall 21 may be constructed as integrally formed portions of a unitary structure.

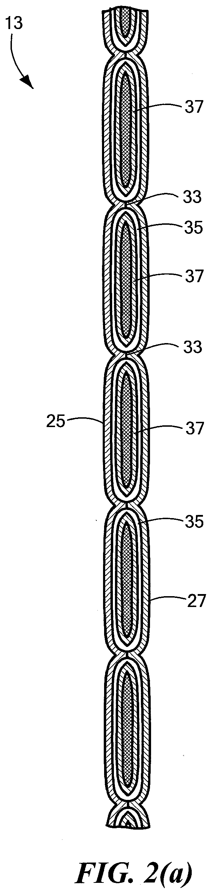

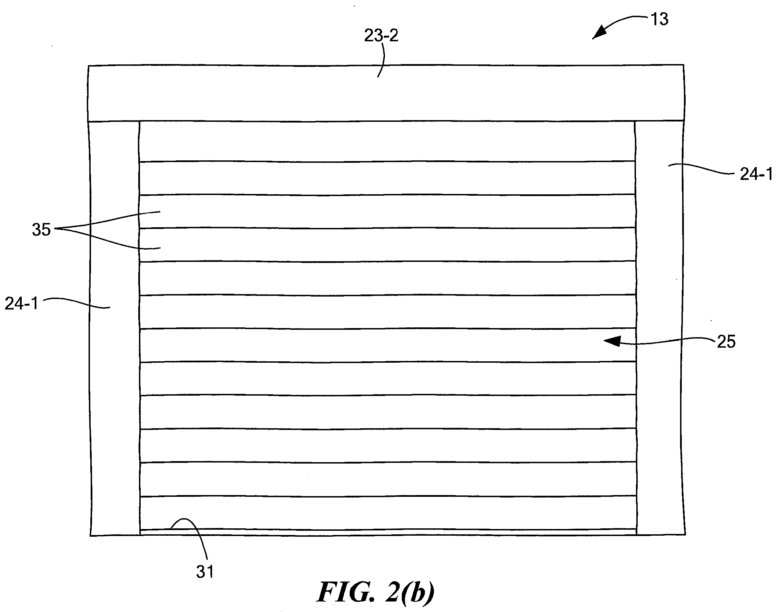

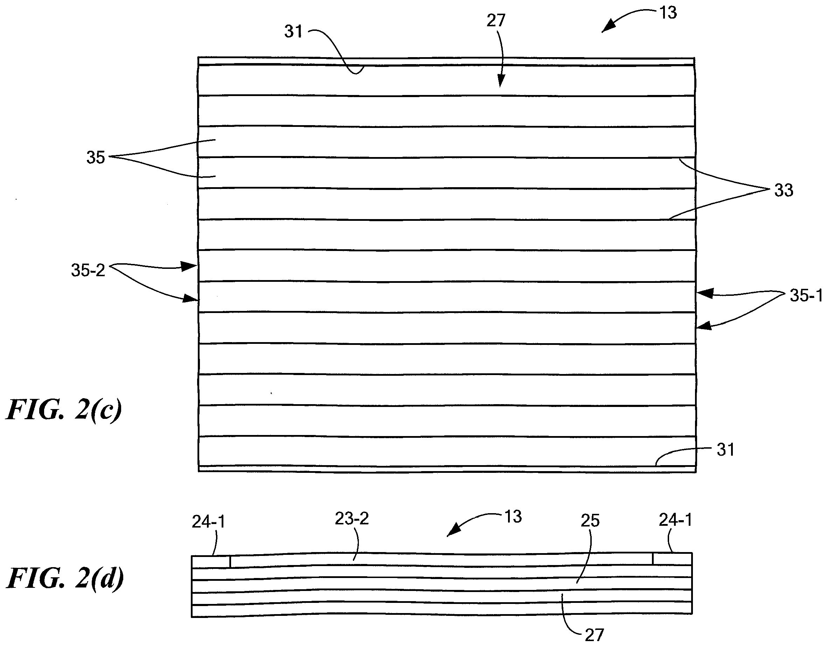

Referring now to Figs. 2(a) through 2(g), front wall 13 is shown in greater detail (the straps 43 of front wall 13, as well as other features not critical to the disclosure, not being shown in one or more of Figs. 2(a) through 2(g) for the sake of simplicity or are shown therein in a simplified manner). As can be seen, front wall 13 may be an assembly of components and may comprise an inner (i.e., proximate to the payload) sheet 25 and an outer (i.e., distal to the payload) sheet 27. Inner sheet 25 and outer sheet 27 may be generally rectangular sheets of substantially matching size. Each of inner sheet 25 and outer sheet 27 may be made from a suitable material, such as a fabric material. Solely for purposes of illustration and not intended as an exhaustive discussion of variations, each of sheets 25 and 27 may be a NYLON polyamide fabric sheet, each of sheets 25 and 27 may be a polyvinyl chloride (PVC) fabric sheet, each of sheets 25 and 27 may be a PVC-coated fabric sheet, sheet 25 may be a PVC fabric sheet and sheet 27 may be a PVC-coated fabric sheet or vice versa, one or more of sheets 25 and 27 may be a polyethylene fabric sheet, a polyethylene scrim, or a polyethylene terephthalate fabric sheet, such as a metalized or vinyl-coated polyethylene terephthalate fabric sheet; alternatively, sheets 25 and 27 may be any suitable combination of materials previously described. According to one particular example, sheet 25 may be a PVC mesh fabric sheet, and sheet 27 may be a PVC-coated fabric sheet. A benefit to using a mesh fabric for sheet 25 is that a user may easily visually inspect whatever contents, if any, that may be positioned between sheets 25 and 27. If desired, to prevent a payload that is covered by pallet cover 11 from being heated due to exposure to direct sunlight, one or both of sheets 25 and 27 may be made from a material that reflects solar radiation or may be coated with a material that reflects solar radiation; alternatively, one or both of sheets 25 and 27 may have a color that reflects solar radiation. For example, the base polymer or a coating for the fabric could have a pigment or dye.

Inner sheet 25 and outer sheet 27 may be joined to one another along the top and bottom edges of sheets 25 and 27 by a pair of parallel outer seams 31 and may additionally be joined to one another along a plurality of generally parallel inner seams 33. Seams 31 and 33, which may be parallel to each other, may be formed by sewing, heat-sealing, or other suitable means. Seams 31 and 33 may define a series of parallel pockets 35 that may extend generally horizontally across substantially the entire width of front wall 13. Pockets 35 may be formed to have a pair of open ends 35-1 and 35-2; however, pockets 35 may be reversibly opened and closed using releasable fasteners, such as VELCRO complementary hook and loop fasteners. For example, a strip of one type of complementary hook/loop fastener 36-1 may be secured, for example, by stitching, to the outer face of sheet 25 at each of ends 35-1 and 35-2, and a strip of the other type of complementary hook/loop fastener 36-2 may be secured, for example, by stitching, to the inner face of sheet 27 at each of ends 35-1 and 35-2. (Although not shown, a tab of fabric or another similarly suitable material may be positioned over a portion of fastener 36-1 and/or fastener 36-2 to facilitate the pulling apart of fasteners 36-1 and 36-2 from one another.) Alternatively, other types of non-permanent fasteners (e.g., snaps, buttons, zippers, ties, cinches, releasable adhesives, etc.) may be used instead of complementary hook and loop fasteners. As will become apparent below, by using non-permanent fasteners to reversibly close ends 35-1 and 35-2, temperature-control members may be removably and securely disposed within pockets 35. However, it is to be understood that, in another example, one of ends 35-1 and 35-2 may be permanently closed or sealed, for example, by stitching or heat-sealing, whereas the other of ends 35-1 and 35-2 may be non-permanently closed or sealed using one or more non-permanent fasteners of the type described above. Moreover, in yet another example, both of ends 35-1 and 35-2 may be permanently closed or sealed, for example, by stitching or heat-sealing, in which case the temperature-control members disposed within pockets 35 may not be removed therefrom. Furthermore, although front wall 13 is constructed so that ends 35-1 and 35-2 of pockets 35 are disposed on the outward-facing side of front wall 13 (i.e., facing away from a payload), it is to be understood that front wall 13 could be constructed so that ends 35-1 and 35-2 of pockets 35 are disposed on the inward-facing side of front wall 13 (i.e., facing towards a payload).

As noted above, front wall 13 and top wall 21 may be detachably joined to one another using complementary fasteners 23-1 and 23-2. More specifically, fastener 23-2 may be secured, for example, by stitching, to the inner face of sheet 25 along its top edge, and fastener 23-1 may be provided as a part of top wall 21 (see Fig. 1(c)). In addition, front wall 13 may be detachably joined to each of left wall 17 and right wall 19 using complementary fasteners 24-1 and 24-2. More specifically, fasteners 24-1 may be secured, for example, by stitching, to the inner face of sheet 25 along its left and right edges, and fasteners 24-2 may be provided as parts of left wall 17 and right wall 19 (see Fig. 1(c)). (As can be appreciated, instead of securing fasteners 23-2 and 24-1 to the inner face of sheet 25, one or more of fasteners 23-2 and 24-1 may be secured to the outer face of sheet 27.)

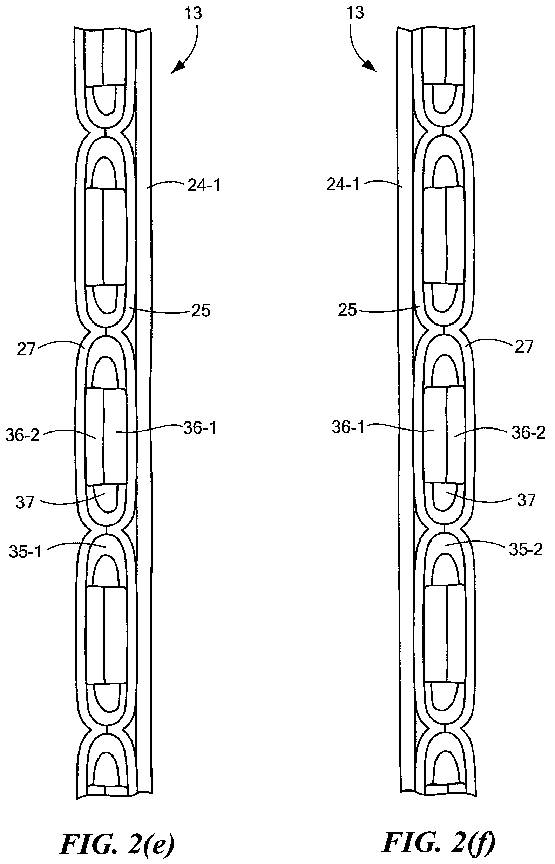

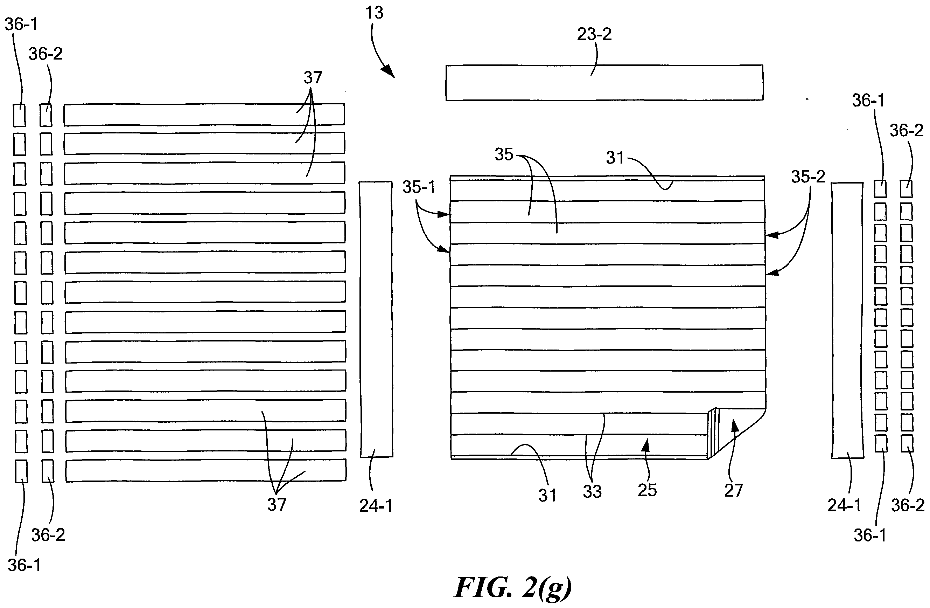

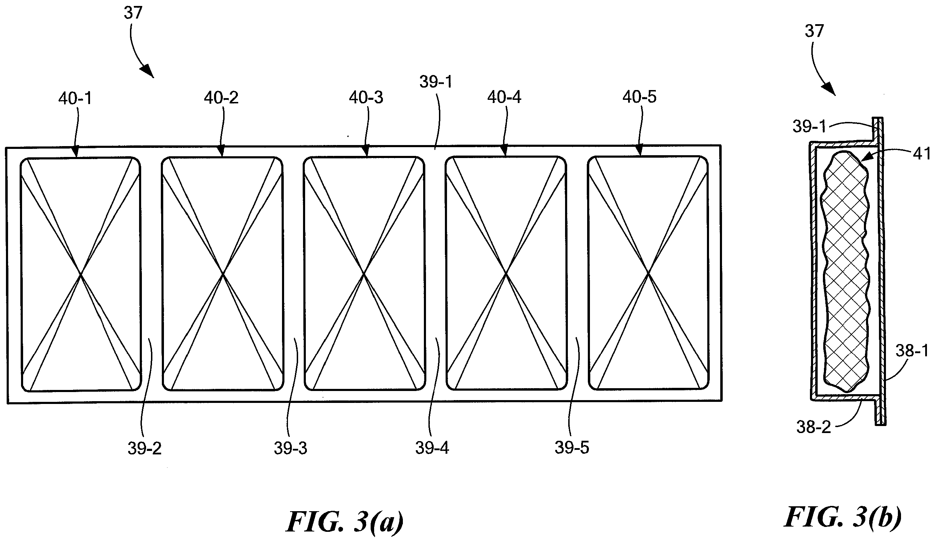

Front wall 13 may further comprise a plurality of temperature-control members 37, which members 37 are shown in a simplified manner in Figs. 2(a), 2(e), 2(f) and 2(g). Each temperature-control member 37, which is also shown separately in Figs. 3(a) and 3(b), may be appropriately dimensioned to occupy a portion of or substantially the entirety of one of pockets 35. Temperature-control member 37 may take a variety of different forms and may comprise one or more refrigerant packs of the type disclosed in U.S. Patent No. 9,598,622 B2, inventors Formato et al., issued March 21, 2017, and U.S. Patent Application Publication No. US 2018/0093816 A1, inventors Longley et al., published April 5, 2018. More specifically, according to one example, temperature-control members 37 may be in the form of flexible mats having a plurality of discrete sealed pouches, each pouch containing a quantity of a phase-change material (PCM). The phase-change material may be any phase-change material including any water-based or organic phase-change material. For example, if the phase-change material is water-based, the phase-change material may be water, a mixture of water and a thickener (e.g., a polysaccharide thickener) to produce a gelled water mixture, or a water/salt solution with an optional thickener (such as a 500-ST series KOOLIT^{®} gel pack or saddlebag from Cold Chain Technologies, Inc. (Franklin, MA)). Temperature-control member 37 may also take other forms and may comprise one or more conventional ice packs or gel packs.

According to one example, temperature-control member 37 may be in the form of one or more flexible mats, each of which may comprise a pair of flexible polymer films 38-1 and 38-2. Film 38-1, which may be flat, may comprise, for example, a laminate or co-extrusion comprising polyethylene, ethylene vinyl alcohol, and NYLON^{™} polyamide layers, the laminate or co-extrusion having an overall thickness of about 4 mils, with the film being oriented so that the bottom layer is polyethylene. Film 38-2, which may be shaped, for example, by thermoforming (or plug-assist thermoforming) to include a plurality of troughs, may comprise, for example, a laminate or co-extrusion comprising polyethylene, ethylene vinyl alcohol, and NYLON^{™} polyamide layers, the laminate or co-extrusion having an overall thickness of about 6-7 mils (0.015-0.018 cm), with the film being oriented so that the top layer is polyethylene. Films 38-1 and 38-2 may be joined to one another, for example, by heat-sealing the opposing polyethylene layers along the respective peripheries of films 38-1 and 38-2 to define a peripheral seam 39-1 and also in the areas corresponding to the spaces between adjacent troughs to define a plurality of inner seams 39-2 through 39-5, thereby defining a mat comprising a plurality of sealed pouches 40-1 through 40-5 (pouches 40-1 through 40-5 being impermeable to the contents contained therewithin). It is to be understood that, instead of being polyethylene, the sealant material for films 38-1 and 38-2 could be a plastomer or ionomer. Solely for purposes of illustration and without being limited to any particular dimensions, each of pouches 40-1 through 40-5 may have a length of approximately 7-7¼ inches (17.78-18.42 cm), a width of approximately 3½-3¾ inches (8.89-9.53 cm) , and a depth of approximately ¼ inch (0.64 cm) to approximately 1¼ inches (3.18 cm).

As can also readily be appreciated, the thermoforming of film 38-2 and the joining of films 38-1 and 38-2 to one another may be performed as part of a continuous process, which may be partially or completely automated. It is to be understood that the number and shape of pouches 40-1 through 40-5 that are shown in Fig. 3(a) are merely illustrative and that the number and shape of pouches 40-1 through 40-5 may be varied while still coming within the scope of the present invention. (For example, although five pouches are shown in temperature-control member 37, there may be as few as one pouch per temperature-control member 37 or as many as six or more pouches per temperature-control member 37).

A quantity of a phase-change material (PCM) 41 may be positioned within each of the troughs of film 38-2 prior to the joining together of films 38-1 and 38-2. According to one example, films 38-1 and 38-2 and phase-change material 41 may have a combined weight of approximately 27.5 ounces (779.6 g). (If temperature-control member 37 were modified to have two pouches, its combined weight would be approximately 11 ounces (311.8 g), and if temperature-control member 37 were modified to have six pouches, its combined weight would be approximately 33 ounces (935.5 g).) Phase-change material 41 may be any phase-change material including any water-based or organic phase-change material. Solely for purposes of illustration, phase-change material 41 may comprise, in a particular example, a gelled organic phase-change material, examples of which are disclosed in U.S. Patent Application Publication No. US 2014/0290285 A1, inventors Formato et al., published October 2, 2014. More specifically, a suitable gelled phase-change material may comprise one or more n-alkanes, such as n-tetradecane (C14), n-pentadecane (C15), n-hexadecane (C16), n-heptadecane (C17), and n-octadecane (C18), together with a gelling agent in the form of a styrene-ethylene-butylene-styrene triblock copolymer or a styrene-ethylene-propylene-styrene triblock copolymer. Preferably, the gelling agent constitutes less than 10% of the gelled phase-change material, with the remainder of the gelled phase-change material constituting the one or more n-alkanes. Notwithstanding the above, a nominal amount of a wax-compatible dye (e.g., less than about 0.01% by weight) may also be included in the gelled phase-change material to give the gelled phase-change material a desired and/or distinctive color. In this manner, for example, gels that possess different phase-change temperatures may each be dyed a different color. Examples of suitable dyes include, for example, the family of EVO dyes commercially available from The Candlewic Company of Doylestown, Pennsylvania.

Illustrative examples of combinations of n-alkanes may include, but are not limited to, mixtures of n-tetradecane and n-hexadecane, mixtures of n-tetradecane and n-pentadecane, and mixtures of n-hexadecane and n-octadecane. Examples of the aforementioned gelling agent may include one or more of Kraton^{™} G1651 copolymer (a high molecular weight SEBS tri-block copolymer with a styrene:rubber ratio of 30:70 % by weight), Kraton^{™} G1654 copolymer (a high molecular weight SEBS tri-block copolymer with a styrene:rubber ratio of 33:67 % by weight), or Kraton^{™} G1660 copolymer (an SEBS tri-block copolymer with a styrene:rubber ratio of 31:69 % by weight), or an SEPS copolymer, such as, but not limited to, SEPTON^{™} S2005 copolymer (a high molecular weight SEPS tri-block copolymer with a styrene:rubber ratio of 20:80 % by weight).

To prepare the gelled phase-change material, the above-described one or more n-alkanes and the above-described gelling agent may be mixed at a first temperature at which the at least one n-alkane is in a liquid state and which is below the flashpoint of the at least one n-alkane and at which the mixture is not a viscoelastic liquid, whereby a non-homogeneous mixture is produced. In most instances, if the phase-change material is a liquid at room temperature, i.e., at a temperature in the range of about 15°C to about 30°C or, more specifically, at a temperature in the range of about 19°C to about 25°C, the aforementioned mixing step may take place at room temperature. The aforementioned mixing of the one or more n-alkanes with the gelling agent may be performed, for example, by dispensing the gelling agent and the one or more n-alkanes into a receptacle, such as a trough of film 38-2. For purposes of illustration, approximately 12-18 g of a gelling agent, such as Kraton^{™} G1654 copolymer, and approximately 150-200 g of one or more n-alkanes, may be added to each receptacle. Next, the receptacle may be sealed, such as with film 38-1 (after, optionally, vacuuming substantially all of the air from within the receptacle). Thereafter, the receptacle may be vibrated for about 5 to 60 seconds at ambient temperature so that the gelling agent is substantially completely wetted by the one or more n-alkanes.

Next, after the above-described mixing step has been performed, the non-homogenous mixture that is produced may then be heated to a second temperature that is below the flashpoint of the at least one n-alkane and at which a viscoelastic liquid is formed. The temperature at which the viscoelastic liquid may be formed may be between about 40°C and about 80°C, preferably between about 45°C and about 60°C or between about 45°C and about 55°C, depending on the formulation used, and the heating step may comprise heating the mixture to a corresponding temperature of between about 40°C and about 80°C, preferably between about 45°C and about 60°C or between about 45°C and about 55°C, depending on the formulation used. For example, the non-homogeneous mixture may be heated to a temperature of about 50°C or to a temperature of about 60°C, depending on the formulation used. The step of heating the non-homogeneous mixture may include a ramp phase during which the temperature of the non-homogeneous mixture may be raised from the first temperature to the second temperature and a constant (or soak) phase during which the temperature of the non-homogeneous mixture may be maintained at the second temperature. The aforementioned ramp phase may have a duration of about 0.75 to 2.0 hours and may range from a minimum ramp rate of about 0.025°C/minute to a maximum ramp rate of about 2.5°C/minute, with a preferred ramp rate being in the range of about 0.15°C/minute to about 0.75°C/minute, such as 0.45°C/minute. The aforementioned constant (or soak) phase may range from a minimum of about 0.5 hours to a maximum of about 20 hours, with a preferred range of about 1.5 hours to about 3.0 hours. The step of cooling the viscoelastic liquid to room temperature may take place simply by allowing the viscoelastic liquid to cool passively at room temperature or may take place using cooling materials and/or equipment. The cooling step may involve a ramping down of temperature of the viscoelastic liquid at a rate complementary to that described above for the ramp phase of the heating step and/or may take about 1 to 4 hours. In other words, the ramping down of temperature of the viscoelastic liquid during the cooling step may range from a minimum ramp down rate of about 0.025°C/minute to a maximum ramp down rate of about 2.5°C/minute, with a preferred ramp down rate being in the range of about 0.10°C/minute to about 0.55°C/minute. For example, the ramp down rate could be 0.15°C/minute. After the mixing step and prior to the heating step, the non-homogenous mixture may rest for a period of time, during which the gelling agent may swell. This resting period may be, for example, as short as about 5 to 15 minutes or may be as long as several hours up to about 72 hours. The above-described ramp rates, as well as the soak and rest times, may vary depending on the thickness of the mixture, as well as the equipment being used.

The gelling agent and the one or more n-alkanes may be dispensed sequentially or simultaneously into the troughs of film 38-2. According to an example, the gelling agent may first be dispensed into the receptacle, and the one or more n-alkanes may then be dispensed on top of the gelling agent. The mixing, heating, and cooling of the gelling agent and the one or more n-alkanes may take place while the gelling agent and the one or more n-alkanes are present within the troughs of film 38-2; alternatively, one or more of the mixing, heating and cooling steps may be performed prior to dispensing the mixture into the troughs of film 38-2. As can be appreciated, the fabrication of pouches 40-1 through 40-5, as well as the preparation of the phase-change material disposed therewithin, may be performed in an automated or semi-automated fashion.

Examples of gelled organic phase-change materials that may be suitable for use as phase-change material 41 may include the materials provided below in Table I, as well as those disclosed in U.S. Patent Application Publication No. US 2014/0290285 A1:

**TABLE 1**

| Example No. | Approximate Phase-Change Temperature | % N-Alkane | Composition of N-Alkane(s) | % and Name of Gelling Agent | Thermal Cycle (Ramp up, Soak, Cool Down); RT= Room Temp. |
|---|---|---|---|---|---|
| 1 | 3°C | 92.6% | 98.5% C14 and 1.5% C16 | 7.4% Kraton^{™} G1654 Powder | Ramp RT to 50C in < 1hr, Soak @ 50C for 1.5 hrs, Cool to RT in Ambient |
| 2a | 5°C | 92.6% | 100% C14 | 7.4% Kraton^{™} G1654 Powder | Ramp RT to 50C in < 1hr, Soak @ 50C for 1.5 hrs, Cool to RT in Ambient |
| 2b | 5°C | 91.7% | 100% C14 | 8.3% Kraton^{™} G1654 Powder | Ramp RT to 50C in < 1hr, Soak @ 50C for 2.5 hrs, Cool to RT in Ambient |
| 3a | 7°C | 92.6% | 38.2% C14 and 61.8% C16 | 7.4% Kraton^{™} G1654 Powder | Ramp RT to 60C in 1hr, Soak @ 60C for 3.0 hrs, Cool to RT in Ambient |
| 3b | 7°C | 92.6% | 16% C14 and 84% C15 | 7.4% Kraton^{™} G1654 Powder | Ramp RT to 50C in < 1hr, Soak @ 50C for 1.5 hrs, Cool to RT in Ambient |
| 4 | 17°C | 92.6% | 100% C16 | 7.4% Kraton^{™} G1654 Powder | Ramp RT to 50C in < 1hr, Soak @ 50C for 1.5 hrs, Cool to RT in Ambient |
| 5 | 24°C | 91.7% | 11.5% C16 and 88.5% C18 | 8.3% Kraton^{™} G1654 Powder | Ramp 30C to 60C in 1hr, Soak @ 60C for 2.0 hrs, Cool to RT in Ambient |

With the exception of above Example Nos. 2b, 3a, and 5, the gelled phase-change materials were prepared by placing the above-described mixtures in a pre-heated oven operating at 50°C for a period of approximately 2.5 hours and then removing the mixtures from the oven and allowing the mixtures to cool passively to room temperature in the ambient environment. The gelled phase-change material of Example No. 5 was made using a "room temperature" of 30°C to prevent freezing of the phase-change material prior to thermal cure, and the soak temperature used therefor was 60°C for 2 hours.

Some of the properties of temperature-control members including the gelled PCMs of Table 1 are presented below in Table 2. The temperature-control members were subjected to phase-change temperature testing, syneresis testing and compressive modulus (stiffness) testing. Specifically, the phase change temperature of the gelled PCM inside each type of temperature-control member was measured by placing a pair of packaged products back-to-back, with a thermocouple inserted between them at the geometric center, and measuring the thermocouple temperature response as the gelled PCM froze and thawed over one cycle, with a controlled change in the environment surrounding the sample. Synersis testing involved suspending the temperature-control members vertically (longest dimension in direction of gravity) and subjecting the temperature-control members to multiple freeze/thaw studies to determine if the samples met the requirement of less than 0.5% syneresis (syneresis defined herein as free-standing liquid PCM in the thermal exchange implement container) after being subjected to 12 freeze/thaw cycles. Note: one cycle is defined as 4 hours at -20°C, followed by 4 hours at +40°C (cycle time needs to be increased if part thickness is increased). Strength (stiffness) of the gelled PCM samples was measured by removing each gelled PCM from its container, measuring the compressive modulus (psi) of the gelled sample at three distinct locations (left, center, right) using a texture analyzer, and averaging these values. The sample thickness was also measured (ultrasonically) at that time.

**TABLE 2**

| Example No. | Avg. Thickness (inches) | Measured THAW Phase-Change Temp (Deg C) | Measured FREEZE Phase-Change Temp (Deg C) | 12 Freeze/Thaw Cycle Syneresis (% weight) | Compressive Modulus (psi) |
|---|---|---|---|---|---|
| 1 | 0.485 | 4.55 | 3.12 | 0.0 | 3.67 |
| 2a | 0.528 | 5.29 | 4.08 | <0.5 | 3.68 |
| 2b | 0.753 | 5.19 | 3.94 | <0.0 | 4.42 |
| 3a | 0.350 | 6.52 | 7.46 | 0.0 | 4.70 |
| 3b | 0.526 | 7.35 | 7.11 | 0.0 | 3.87 |
| 4 | 0.484 | 17.43 | 16.86 | <0.5 | 3.63 |
| 5 | 0.541 | 24.48 | 23.94 | 0.0 | 4.92 |

Gelled organic phase-change materials of the type described above possess many desirable attributes. For example, such gelled materials are capable of conforming to virtually any shaped pouch or other receptacle therefor while, at the same time, being less susceptible to leaking than liquid phase-change materials. In addition, such gelled materials possess good shock absorption and, therefore, provide physical protection to a payload covered thereby. Additionally, such gelled materials are capable of surviving many freeze/thaw cycles while maintaining good performance as a phase-change material. Moreover, such gelled materials possess excellent compression strength - even when placed under a payload (as in certain examples discussed below). Furthermore, the above-described gelled phase-change materials tend to cover more surface area of a product load than do an equivalent amount of a liquid phase-change material, especially when the phase-change material is oriented vertically. This is because liquid phase-change materials tend to flow to the bottom of the receptacle containing the liquid phase-change material. Consequently, orienting the receptacle vertically tends to cause a significant portion of the liquid phase-change material to pool at the bottom of the receptacle. (This problem may persist, albeit to a lesser extent, even if the receptacle is oriented horizontally.) By contrast, the subject gelled materials tend not to flow much, if at all, to the bottom of a receptacle therefor.

In an example, a quantity of phase-change material 41 may be contained within each of pouches 40-1 through 40-5, the contents of pouches 40-1 through 40-5 being sealed from one another. Preferably, each of pouches 40-1 through 40-5 contains approximately the same quantity of the same type of phase-change material 41. Notwithstanding the above, it is to be understood that different pouches 40-1 through 40-5 of a given temperature-control member 37 may contain different types and/or quantities of phase-change material and/or that certain pouches 40-1 through 40-5 of a given temperature-control member 37 may contain phase-change material whereas other pouches 40-1 through 40-5 of the same temperature-control member 37 may be devoid of phase-change material. It is also to be understood that different temperature-control members 37 employed in front wall 13 may contain different types and/or quantities of phase-change material and/or that different walls may contain different types and/or quantities of phase-change material. Also, it is to be understood that certain pockets 35 of front wall 13 may be entirely devoid of a temperature-control member 37 or of any other contents whereas other pockets 35 of front wall 13 may contain one or more temperature-control members 37. Consequently, if desired, one may have phase-change material 41 positioned across a substantial portion of the surface area of front wall 13 (although phase-change material 41 is not present in those areas corresponding to the seams 39-1 through 39-5 of temperature-control members 37 or in those areas corresponding to the seams between pockets 35). Alternatively, if desired, one may have a more uneven distribution of phase-change material 41 across the surface area of front wall 13, such as by positioning greater amounts of phase-change material in the corner regions of front wall 13 and lesser or no amounts of phase-change material in the central regions of front wall 13 or by positioning greater amounts of phase-change material in the upper portion of front wall 13 and lesser or no amounts of phase-change material in the lower portion of front wall 13.

Referring back now to Figs. 1(a) through 1(c), front wall 13 may further comprise along its bottom edge one or more closure devices 43, such as straps, clips, hooks, or the like, that may be used to secure front wall 13 to a pallet P. Pallet P may be a conventional wooden or plastic pallet. Alternatively, pallet P may be a thermally insulated pallet, such as an AIRDEX pallet, which is commercially available from Foam Fabricators, Modesto, CA. An AIRDEX pallet typically contains 2+ inches of expanded polystyrene insulation. The use of a thermally insulated pallet may obviate the desirability, in certain cases, of positioning an insulating material and/or a phase-change material below the payload.

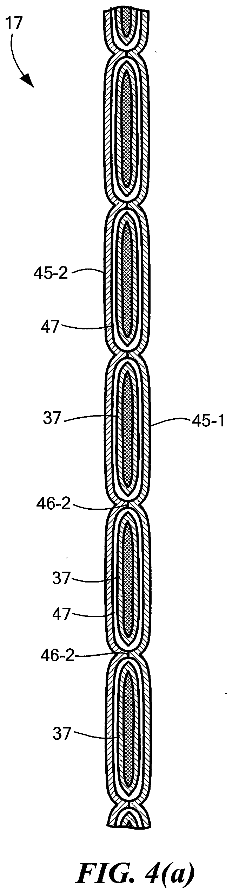

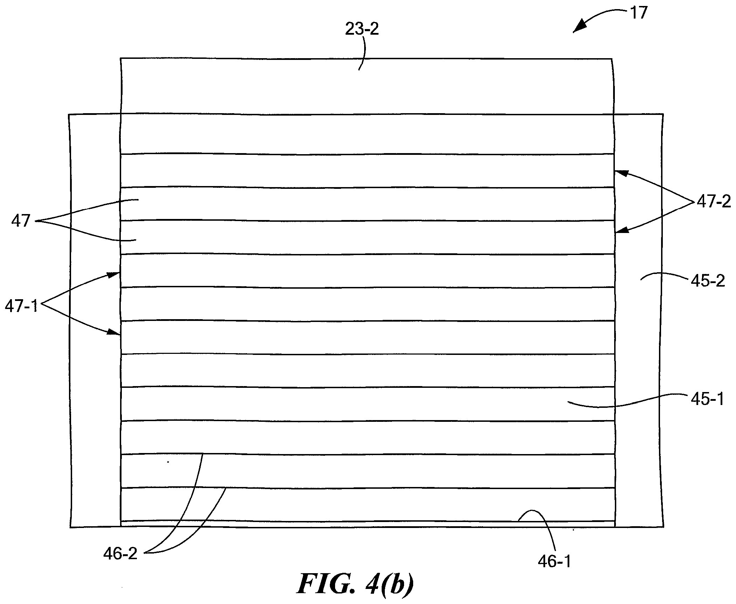

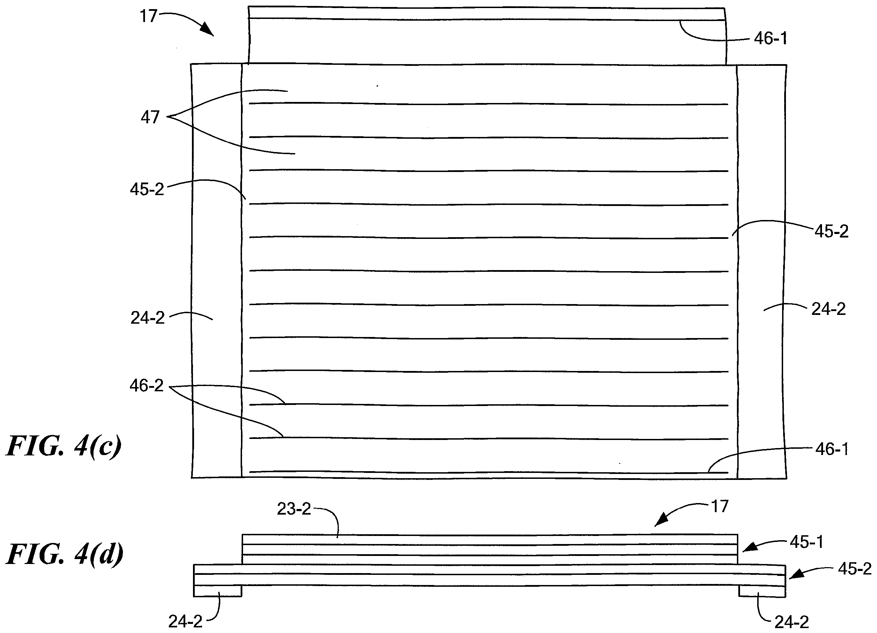

Referring now to Figs. 4(a) through 4(g), left wall 17 is shown in greater detail. (Although left wall 17 may include along its bottom edge one or more closure devices 43 like those of front wall 13, such closure devices 43 are not shown in Figs. 4(a) through 4(g) for ease of illustration. Other features of left wall 17 not critical to the invention may not be shown in one or more of Figs. 4(a) through 4(g) or may be shown therein in a simplified manner.) As can be seen, left wall 17 may be an assembly of components and may comprise an inner (i.e., proximate to the payload) sheet 45-1 and an outer (i.e., distal to the payload) sheet 45-2. Inner sheet 45-1 and outer sheet 45-2 may be generally rectangular sheets of generally similar size, with inner sheet 45-1 preferably being slightly undersized relative to outer sheet 45-2 so that small portions of the left and right sides of outer sheet 45-2 extend beyond and are uncovered by inner sheet 45-1. Each of inner sheet 45-1 and outer sheet 45-2 may be made from a suitable material and may be made of the same types of materials as sheets 25 and 27, respectively, of front wall 13.

Inner sheet 45-1 and outer sheet 45-2 may be joined to one another along the top and bottom edges of fabric sheets 45-1 and 45-2 by a pair of parallel outer seams 46-1 and may additionally be joined to one another along a plurality of generally parallel inner seams 46-2. Seams 46-1 and 46-2, which may be parallel to each other, may be formed by sewing, heat-sealing, or other suitable means. Seams 46-1 and 46-2 may define a series of parallel pockets 47 that may extend generally horizontally across substantially the entire width of fabric sheet 45-1. Pockets 47 may be formed to have a pair of open ends 47-1 and 47-2; however, pockets 47 may be reversibly opened and closed using strips of complementary hook and loop fasteners 48-1 and 48-2 located on opposing faces of sheets 45-1 and 45-2 at each of ends 47-1 and 47-2. For example, fastener 48-1 may be secured, for example, by stitching, to the outer face of sheet 45-1 at each of ends 47-1 and 47-2, and fastener 48-2 may be secured, for example, by stitching, to the inner face of sheet 45-2 at each of ends 47-1 and 47-2. Alternatively, other types of non-permanent fasteners (e.g., snaps, buttons, zippers, ties, cinches, resealable adhesives, etc.) may be used instead of complementary hook and loop fasteners. As will become apparent below, by using non-permanent fasteners to reversibly close ends 47-1 and 47-2, temperature-control members may be removably and securely disposed within pockets 47. However, it is to be understood that, in another example, one of ends 47-1 and 47-2 may be permanently closed or sealed, for example, by stitching or heat-sealing, whereas the other of ends 47-1 and 47-2 may be non-permanently closed or sealed using one or more non-permanent fasteners of the type described above. Moreover, in yet another example, both of ends 47-1 and 47-2 may be permanently closed or sealed, for example, by stitching or heat-sealing. Furthermore, although left wall 17 is constructed so that ends 47-1 and 47-2 of pockets 47 are disposed on the inward-facing side of left wall 17 (i.e., facing towards a payload), it is to be understood that left wall 17 could be constructed so that ends 47-1 and 47-2 of pockets 47 are disposed on the outward-facing side of left wall 17 (i.e., facing away from a payload).

As noted above, left wall 17 and top wall 21 may be detachably joined to one another using complementary fasteners 23-1 and 23-2. More specifically, fastener 23-2 may be secured, for example, by stitching, to the inner face of sheet 45-1 along its top edge, and fastener 23-1 may be provided as a part of top wall 21 (see Fig. 1(c)). In addition, left wall 17 may be detachably joined to each of front wall 13 and rear wall 15 using complementary fasteners 24-1 and 24-2. More specifically, strips of fasteners 24-2 may be secured, for example, by stitching, to the outer face of sheet 45-2 along its left and right edges, and strips of fasteners 24-1 may be provided as parts of front wall 13 and rear wall 15 (see Fig. 1(c)). (As can be appreciated, instead of securing fastener 23-2 to the inner face of sheet 45-1 and securing fastener 24-2 to the outer face of sheet 45-2, one could alternatively secure fastener 23-2 to the outer face of sheet 45-2 and/or secure fastener 24-2 to the inner face of sheet 45-2.) Preferably, fasteners 23-1 and 23-2 and fasteners 24-1 and 24-2 are appropriately positioned on their respective walls so that, when such walls are joined together thereby, the pockets of one wall come into close proximity with the pockets of the wall joined thereto. In this manner, as will be apparent from the discussion below, it is possible for the contents of the pockets in neighboring walls to be brought into close proximity to one another, thereby minimizing the gap between temperature-control members of neighboring walls.

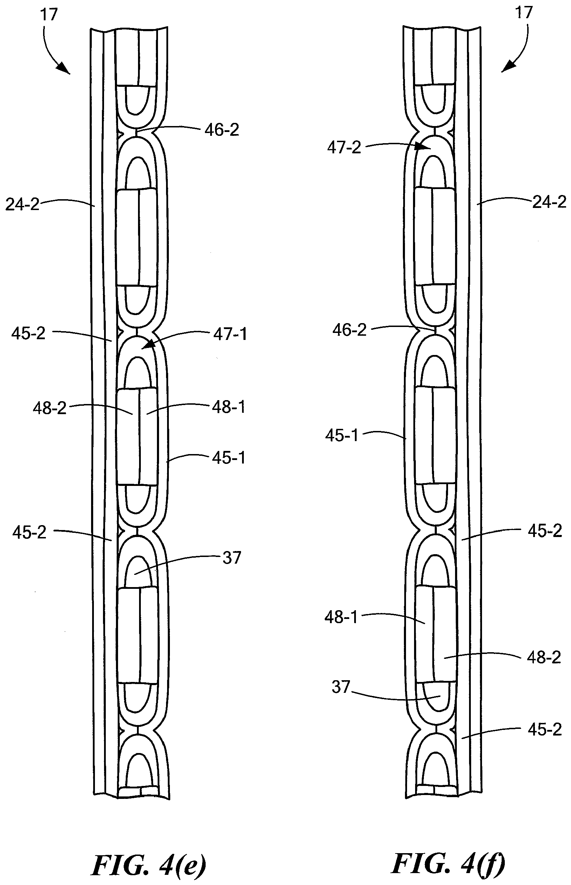

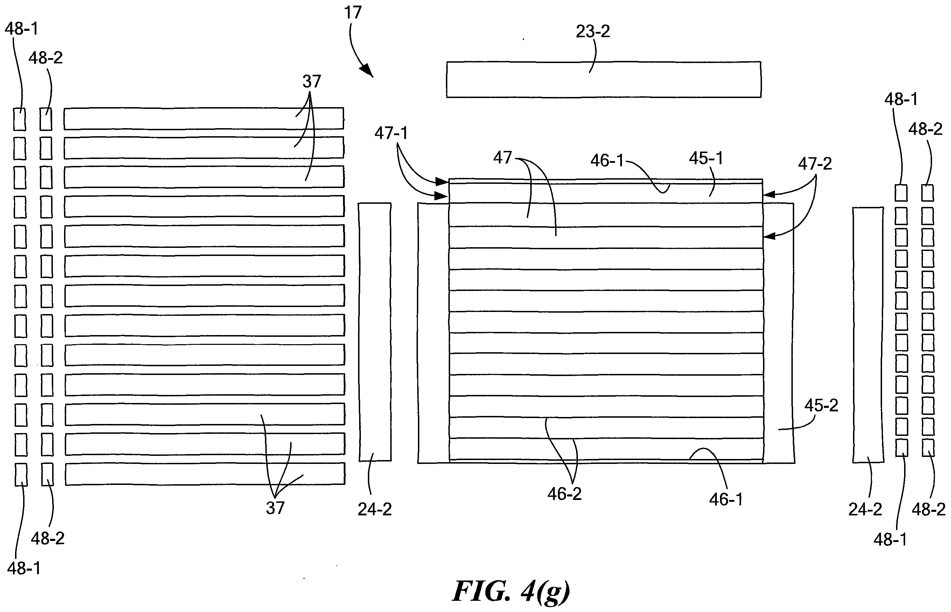

Left wall 17 may further comprise a plurality of temperature-control members 37, which members 37 are shown in a simplified manner in Figs. 4(a), 4(e), 4(f) and 4(g). According to one example, an identical temperature-control member 37 may be disposed within each of pockets 47. However, as described above in connection with front wall 13, different pouches 40-1 through 40-5 of a given temperature-control member 37 may contain different types and/or quantities of phase-change material and/or certain pouches 40-1 through 40-5 of a given temperature-control member 37 may contain phase-change material whereas other pouches 40-1 through 40-5 of the same temperature-control member 37 may be devoid of phase-change material. Moreover, different temperature-control members 37 employed in left wall 17 may contain different types and/or quantities of phase-change material, and certain pockets 47 of left wall 17 may be entirely devoid of a temperature-control member 37 or of any other contents whereas other pockets 47 of left wall 17 may contain one or more temperature-control members 37. Consequently, if desired, one may have phase-change material 41 positioned across a substantial portion of the surface area of left wall 17 (although phase-change material 41 is not present in those areas corresponding to the seams 39-1 through 39-5 of temperature-control members 37 or in those areas corresponding to the seams between pockets 47 or in the areas beyond the left and right sides of sheet 45-1). Alternatively, if desired, one may have a more uneven distribution of phase-change material 41 across the surface area of left wall 17, such as by positioning greater amounts of phase-change material in the corner regions of left wall 17 and lesser or no amounts of phase-change material in the central regions of left wall 17 or by positioning greater amounts of phase-change material in the upper portion of left wall 17 and lesser or no amounts of phase-change material in the lower portion of left wall 17.

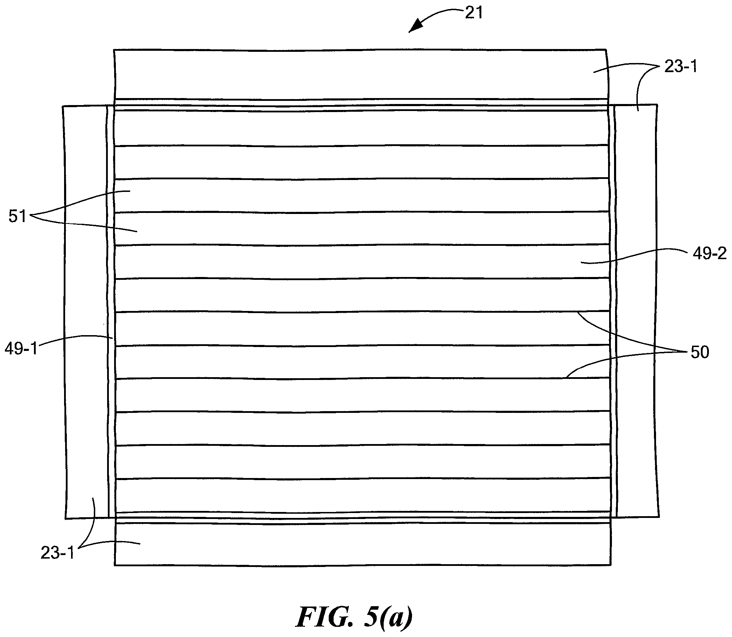

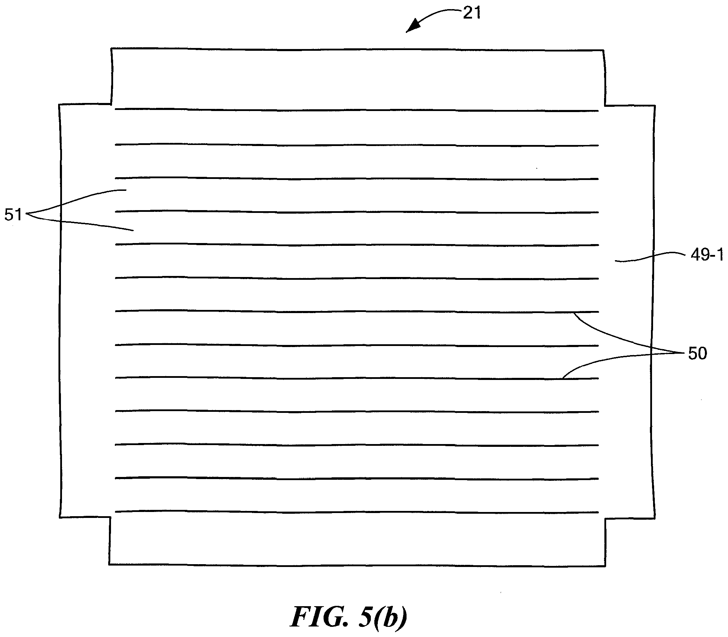

Referring now to Figs. 5(a) through 5(d), top wall 21 is shown in greater detail. (Certain features of top wall 21 not critical to the invention may not be shown in one or more of Figs. 5(a) through 5(d) or may be shown therein in a simplified manner.) As can be seen, top wall 21 may be an assembly of components and may comprise an inner (i.e., proximate to the payload) sheet 49-1 and an outer (i.e., distal to the payload) sheet 49-2. Inner sheet 49-1 and outer sheet 49-2 may be generally rectangular sheets of generally similar size, with outer sheet 49-2 preferably being slightly undersized relative to inner sheet 49-1 so that small portions of the four ends of inner sheet 49-1 extend beyond and are uncovered by outer sheet 49-2. Each of inner sheet 49-1 and outer sheet 49-2 may be made from a suitable material and may be made of the same types of materials as sheets 25 and 27, respectively, of front wall 13.

Inner sheet 49-1 and outer sheet 49-2 may be joined to one another along a plurality of parallel seams 50, which may be formed by sewing, heat-sealing or other suitable means. Seams 50 may define a series of parallel pockets 51 that may extend across substantially the entire width of sheet 49-2. Pockets 51 may be formed to have a pair of open ends; however, pockets 51 may be reversibly opened and closed using strips of complementary hook and loop fasteners 52-1 and 52-2 located on opposing faces of sheets 49-1 and 49-2 at each of the open ends. For example, fastener 52-1 may be secured, for example, by stitching, to the outer face of sheet 49-1 at each of the open ends, and fastener 52-2 may be secured, for example, by stitching, to the inner face of sheet 49-2 at each of the open ends. Alternatively, other types of non-permanent fasteners (e.g., snaps, buttons, zippers, ties, cinches, resealable adhesives, etc.) may be used instead of complementary hook and loop fasteners. As will become apparent below, by using non-permanent fasteners to reversibly close the ends of pockets 51, temperature-control members may be removably and securely disposed within pockets 51. However, it is to be understood that, in another example, one of the ends of pockets 51 may be permanently closed or sealed, for example, by stitching or heat-sealing, whereas the other of the ends of pockets 51 may be non-permanently closed or sealed using one or more non-permanent fasteners of the type described above. Moreover, in yet another example, both of the ends of pockets 51 may be permanently closed or sealed, for example, by stitching or heat-sealing. Furthermore, although top wall 21 is constructed so that the ends of pockets 51 are disposed on the outwardly-facing side of top wall 21 (i.e., facing away from a payload), it is to be understood that top wall 21 could be constructed so that the ends of pockets 51 are disposed on the inwardly-facing side of top wall 21 (i.e., facing towards a payload).

As alluded to above, fasteners 23-1 may be secured, for example, by stitching, to the outwardly-facing side of each of the four exposed ends of inner sheet 49-1. Such fasteners 23-1 are adapted for detachable joining to complementary fasteners 23-2 provided as parts of front wall 13, rear wall 15, left wall 17, and right wall 19 (see Fig. 1(c)) so that top wall 21 may be detachably joined to each of front wall 13, rear wall 15, left wall 17 and right wall 19.

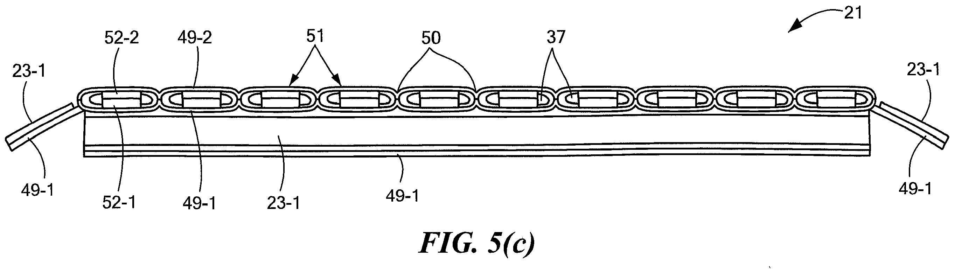

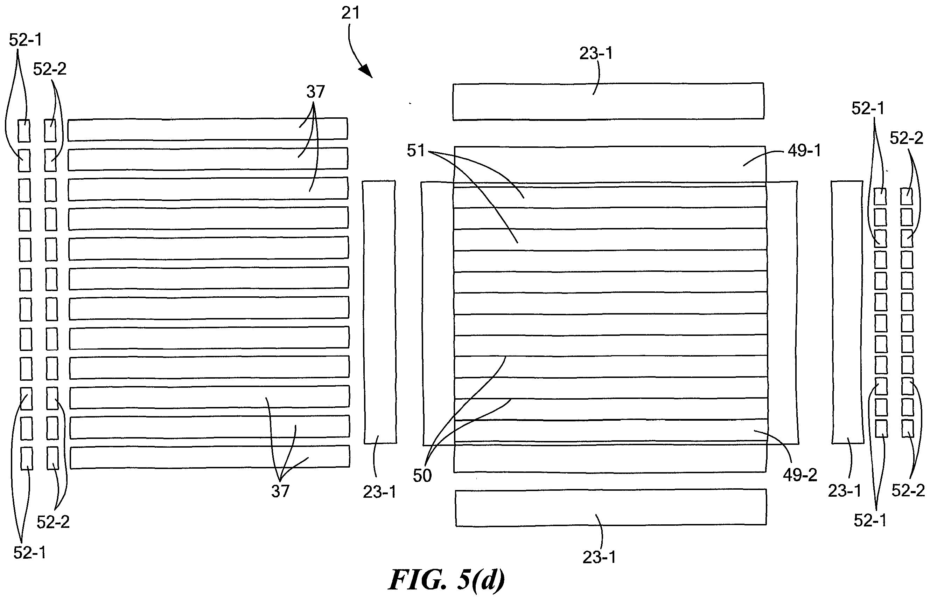

Top wall 21 may further comprise a plurality of temperature-control members 37, which members 37 are shown in a simplified manner in Figs. 5(c) and 5(d). According to one example, an identical temperature-control member 37 may be disposed within each of pockets 51. However, as described above in connection with front wall 13, different pouches 40-1 through 40-5 of a given temperature-control member 37 may contain different types and/or quantities of phase-change material and/or certain pouches 40-1 through 40-5 of a given temperature-control member 37 may contain phase-change material whereas other pouches 40-1 through 40-5 of the same temperature-control member 37 may be devoid of phase-change material. Moreover, different temperature-control members 37 employed in top wall 21 may contain different types and/or quantities of phase-change material, and certain pockets 51 of top wall 21 may be entirely devoid of a temperature-control member 37 or of any other contents whereas other pockets 51 of top wall 21 may contain one or more temperature-control members 37. Consequently, if desired, one may have phase-change material 41 positioned across a substantial portion of the surface area of top wall 21 (although phase-change material 41 is not present in those areas corresponding to the seams 39-1 through 39-5 of temperature-control members 37 or in those areas corresponding to the seams between pockets 51 or in the areas beyond sheet 49-2). Alternatively, if desired, one may have a more uneven distribution of phase-change material 41 across the surface area of top wall 21, such as by positioning greater amounts of phase-change material in the corner regions of top wall 21 and lesser or no amounts of phase-change material in the central regions of top wall 21.

Rear wall 15 may have a construction similar to that of front wall 13, and right wall 19 may have a construction similar to that of left wall 17. Each of front wall 13, rear wall 15, left wall 17, right wall 19, and top wall 21 (as well as the alternative examples of top wall 21) may possess any of the variations of the types described above, and each of front wall 13, rear wall 15, left wall 17, right wall 19, and top wall 21 (as well as the alternative examples of top wall 21) may possess any such variations independently of one another.

As alluded to above, pallet cover 11 may additionally comprise a bottom wall for placement under the payload. Said bottom wall may comprise a layer of insulation and/or a phase-change material. If a phase-change material is used, such a phase-change material is preferably a gelled organic phase-change material of the type described above.

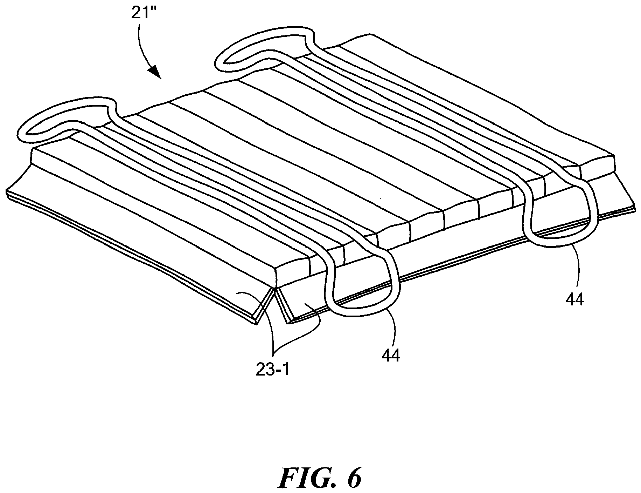

As can be seen in Fig. 6, there is shown another alternative example of top wall 21, namely, top wall 21". Top wall 21" is similar to top wall 21 but includes one or more looped handles 44 to facilitate the lifting and movement of top wall 21".

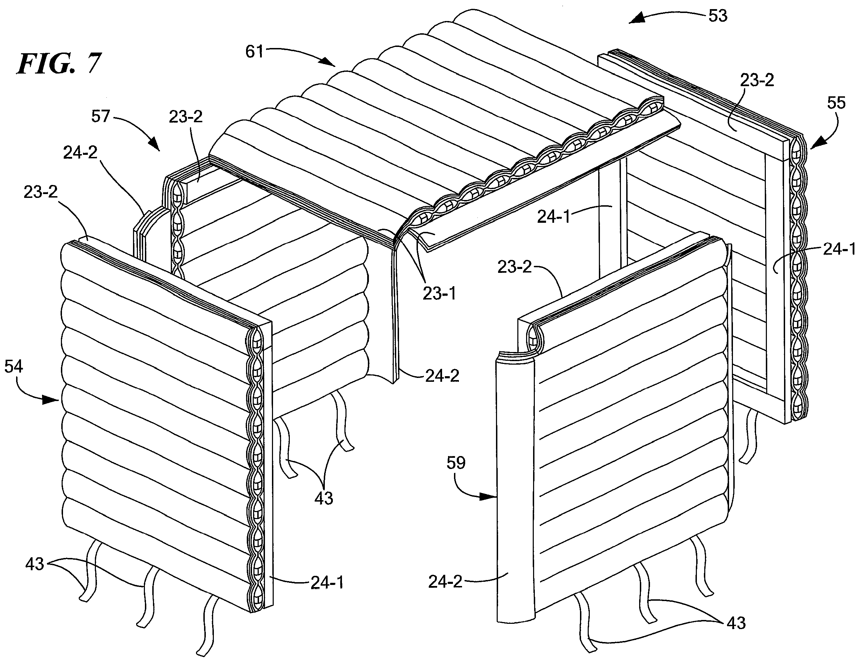

Referring now to Fig. 7, there is shown is a partly exploded perspective view of a second example of a pallet cover being represented generally by reference numeral 53.

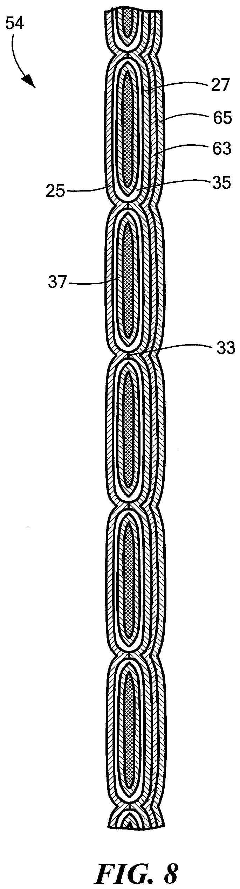

Pallet cover 53 may be similar in most respects to pallet cover 11, the principal difference between the two pallet covers being that, whereas pallet cover 11 may include front wall 13, rear wall 15, left wall 17, right wall 19, and top wall 21, pallet cover 53 may comprise a front wall 54, a rear wall 55, a left wall 57, a right wall 59, and a top wall 61. As seen best in Fig. 8, front wall 54 of pallet cover 53 may differ principally from front wall 13 of pallet cover 11 in that front wall 54 may further comprise an outer layer of thermal insulation 63 and a third sheet 65. Third sheet 65 may be a fabric sheet and may be similar in composition to sheets 25 and 27. Outer layer of insulation 63, which may be any suitable thermally-insulating material, such as, but not limited to, a metalized polyester or a bubble wrap with a metalized polyethylene terephthalate layer applied thereto, may be positioned on the outer face of sheet 27, and third sheet 65 may be positioned on the outer face of insulation 63. If desired, third sheet 65 may be sewn or otherwise secured to sheets 25 and 27 along seams 31 and 33. In another example (not shown), insulation 63, may be positioned between temperature-control members 37 and outer sheet 27, and third sheet 65 may be omitted.

Rear wall 55, left wall 57, right wall 59, and top wall 61 may have a construction generally similar to that of rear wall 15, left wall 17, right wall 19, and top wall 21, respectively, of pallet cover 11, except that one or more of rear wall 55, left wall 57, right wall 59, and top wall 61 may additionally include structure corresponding to outer layer of thermal insulation 63 and third sheet 65 of front wall 54.

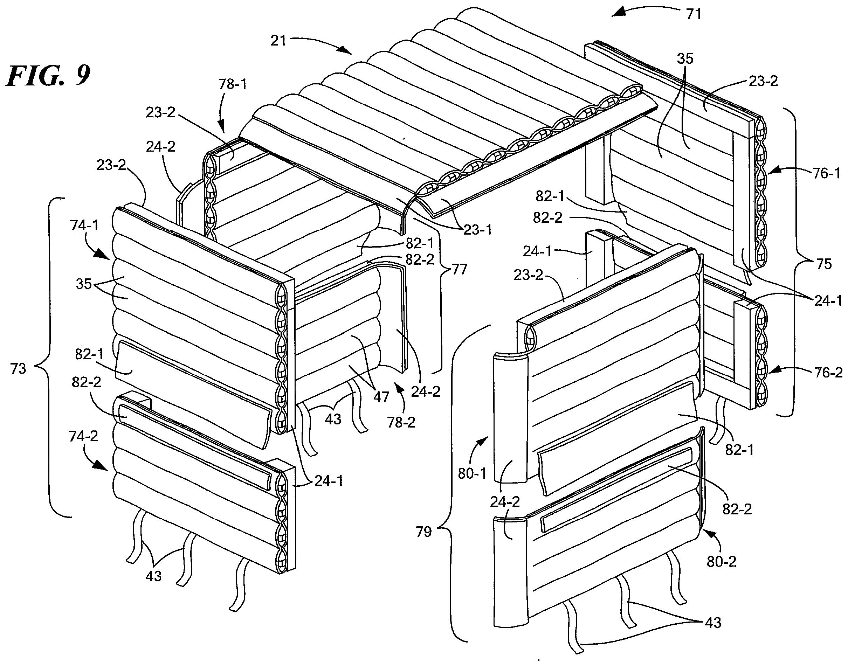

Referring now to Fig. 9, there is shown a partly exploded perspective view of a third pallet cover, the pallet cover being represented generally by reference numeral 71. (Certain features of pallet cover 71 not critical to the disclosure may not be shown in Fig. 9 or may be shown therein in a simplified manner.)

Pallet cover 71 may be similar in most respects to pallet cover 11, the principal difference between the two pallet covers being that, whereas each of front wall 13, rear wall 15, left wall 17, and right wall 19 of pallet cover 11 may be constructed as a unitary structure, pallet cover 71 may comprise a front wall 73, a rear wall 75, a left wall 77, and a right wall 79, each of which may be constructed as a multi-piece structure that may be detachably joined together, for example, using complementary strips of VELCRO hook and loop fasteners or another type of releasable fastener. Consequently, front wall 73 may comprise a first portion 74-1 and a second portion 74-2, rear wall 75 may comprise a first portion 76-1 and a second portion 76-2, left wall 77 may comprise a first portion 78-1 and a second portion 78-2, and right wall 79 may comprise a first portion 80-1 and a second portion 80-2. In the example of Fig. 9, first portions 74-1, 76-1, 78-1 and 80-1 may be detachably joined to top wall 21 using, for example, complementary strips of hook and loop fasteners 23-1 and 23-2 or another type of releasable fastener, and second portions 74-2, 76-2, 78-2 and 80-2 may be detachably joined to first portions 74-1, 76-1, 78-1 and 80-1 using complementary strips of hook and loop fasteners 82-1 and 82-2 or another type of releasable fastener. In a similar fashion, walls 73, 75, 77 and 79 may be detachably joined to one another using complementary strips of hook and loop fasteners 24-1 and 24-2 or another type of releasable fastener.

As can readily be appreciated, the positions of first portions 74-1, 76-1, 78-1 and 80-1 and second portions 74-2, 76-2, 78-2 and 80-2, respectively, may be switched so that second portions 74-2, 76-2, 78-2 and 80-2 are detachably joined directly to top wall 21 (provided that second portions 74-2, 76-2, 78-2 and 80-2 are equipped with the appropriate complementary fastener for joining to top wall 21), with first portions 74-1, 76-1, 78-1 and 80-1 being detachably joined to second portions 74-2, 76-2, 78-2 and 80-2, at a location distal to top wall 21. As can also be appreciated, first portions 74-1, 76-1, 78-1 and 80-1 may be detachably joined directly to top wall 21, without joining second portions 74-2, 76-2, 78-2 and 80-2 to top wall 21 or to first portions 74-1, 76-1, 78-1 and 80-1, respectively, so as to form corresponding walls of reduced length. In an analogous fashion, second portions 74-2, 76-2, 78-2 and 80-2 may be detachably joined directly to top wall 21, without joining first portions 74-1, 76-1, 78-1 and 80-1 to top wall 21 or to second portions 74-2, 76-2, 78-2 and 80-2, respectively, so as to form corresponding walls of reduced length. If both first portions 74-1, 76-1, 78-1 and 80-1 and second portions 74-2, 76-2, 78-2 and 80-2 are joined to top wall 21, regardless of whether first portions 74-1, 76-1, 78-1 and 80-1 are directly joined to top wall 21 or second portions 74-2, 76-2, 78-2 and 80-2 are directly joined to top wall 21, both sets of portions may be partially or fully equipped with temperature-control members 37; alternatively, the portions more distal to top wall 21 may be completely devoid of temperature-control members 37 whereas the portions more proximal to top wall 21 may be partially or fully equipped with temperature-control members 37.

Pallet cover 71 may be modified by incorporating a layer of thermal insulation into one or more of top wall 21, front wall 73, rear wall 75, left wall 77, and right wall 79 in a manner similar to that described above in connection with pallet cover 53.

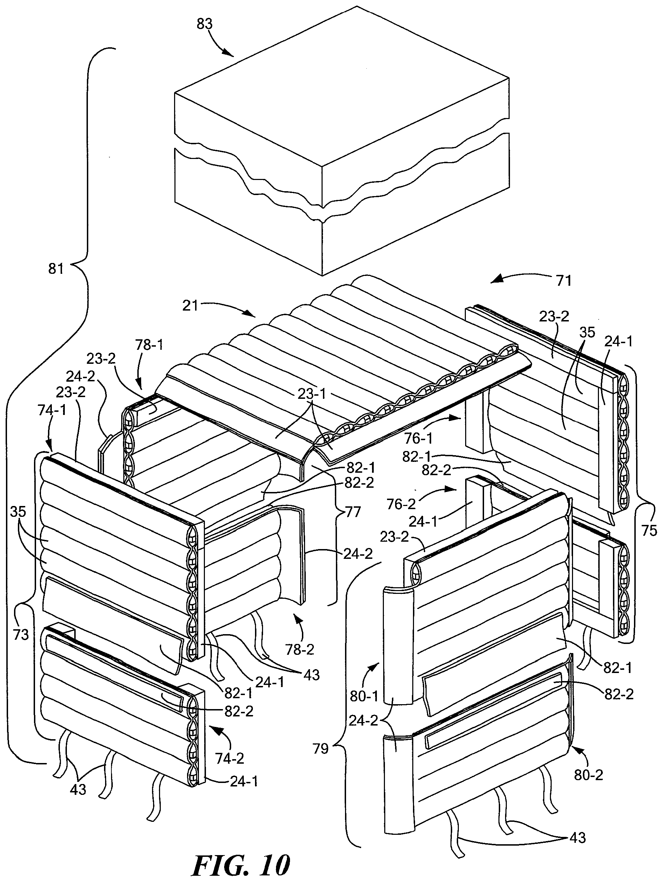

Referring now to Fig. 10, there is shown a perspective view of a fourth pallet cover, the pallet cover being represented generally by reference numeral 81.

Pallet cover 81 may be similar in many respects to pallet cover 71, the principal difference between the two pallet covers being that pallet cover 81 may comprise, in addition to pallet cover 71, a thermal insulation wrap 83 that may be removably inserted over pallet cover 71. Wrap 83, which may be shaped to cover the top, front, rear, left side and right side of pallet cover 71 while having an open bottom, may be a laminated structure and may comprise, for example, one or more layers of metalized plastic. An example of a suitable material for use as wrap 83 may include a laminate comprising a polyethylene terephthalate layer, a polypropylene layer, and an aluminum layer, such a laminate being commercially available from Trip & Co. (Nieuw-Vennep, The Netherlands) as GoodCape Extreme. Other suitable laminates may include combinations of polyethylene, aluminum and airbubble foil layers (e.g., GoodCape Standard, Trip & Co.) and combinations of aluminum, nonwoven, and polypropylene layers (e.g., GoodCape Light, Trip & Co.).

Thermal insulation wrap 83 may also be used in combination with pallet cover 11, pallet cover 53 and any of the variations thereto discussed herein.

As noted above, it may be desirable in certain situations to have a non-uniform distribution of phase-change material along one or more faces of the payload. In particular, it may be desirable to have greater quantities of phase-change material along the edges of each face of the payload since these areas are often the most vulnerable to temperature excursions. One example of such an approach is discussed below.

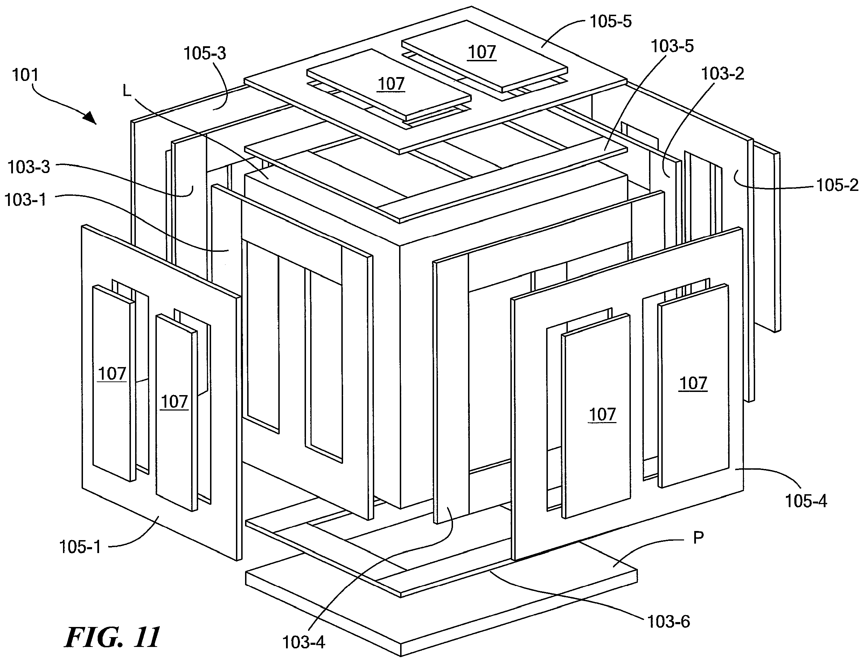

Referring now to Fig. 11, there is shown a partly exploded perspective view of a fifth pallet cover, the pallet cover being represented generally by reference numeral 101. It should be noted that, in Fig. 11, the sheets (typically of fabric) of pallet cover 101 are not shown in order to reveal certain internal components of pallet cover 101. It should also be noted that pallet cover 101 is shown in Fig. 11 in combination with a payload L, such as a 40 inch by 48 inch payload, on a pallet P.

Pallet cover 101 may comprise a plurality of temperature-control assemblies 103-1 through 103-5 that may be positioned along the front, rear, left side, right side, and top surfaces, respectively, of the payload L. Each of temperature-control assemblies 103-1 through 103-5 may comprise a plurality of temperature-control members, each of which may be generally similar in structure to temperature-control member 37. A plurality of temperature-control members of each of assemblies 103-1 through 103-5 may be arranged to form a bifurcated windowpane structure that may be aligned generally with the top, left side, right side and bottom edges of its respective payload surface, with an additional temperature-control member extending from the top temperature-control member to the bottom temperature-control member at their respective midpoints. The above-described construction of assemblies 103-1 through 103-5 provides optimal protection to the areas of payload L most vulnerable to temperature excursions.

Pallet cover 101 may additionally comprise a temperature-control assembly 103-6 to be positioned below payload L. Temperature-control assembly 103-6 may differ from temperature-control assembly 103-1 through 103-5 in that temperature-control assembly 103-6 may omit the temperature-control member that corresponds to the temperature-control member extending from the top temperature-control member to the bottom temperature-control member at their respective midpoints. Alternatively, temperature-control assembly 103-6 may include such a structure.

It is to be understood that each of temperature-control assemblies 103-1 through 103-6 may comprise, independently of one another, a single type of temperature-control member or may comprise a plurality of different types of temperature-control members that may vary from one another in phase-change material composition, quantity and/or dimensions.

Pallet cover 101 may further comprise a plurality of thermal insulation members 105-1 through 105-5. Insulation members 105-1 through 105-5, which may be made of bubblewrap or any other similarly suitable insulating material, may be aligned with and placed in contact with the outwardly-facing surfaces of temperature-control assemblies 103-1 through 103-5, respectively.

Pallet cover 101 may further comprise a plurality of thermal insulation members 107. Insulation members 107, which may be made of a flexible polyurethane foam, may be positioned in the spaces within temperature-control assemblies 103 and insulation members 105. Preferably, the combined thickness of each set of temperature-control assembly 103 and insulation member 105 is approximately equal to the thickness of insulation members 107.

Without wishing to be limited to any particular dimensions, the temperature-control members used to form temperature-control assemblies 103-1 through 103-5 may be approximately 7 inches wide and approximately ½ inch thick, insulation members 105-1 through 105-5 may be approximately ½ inch thick, and insulation members 107 may be approximately 1 inch thick.

In another example (not shown), insulation members 105-1 through 105-5 of pallet cover 101 may be replaced with additional temperature-control assemblies that may be the same as or different from temperature-control assemblies 103-1 through 103-5. Moreover, in such an alternative example, the two layers of temperature-control assemblies may not have a windowpane configuration, but rather, may simply be a solid rectangular shape, and insulating members 107 may be omitted.

In yet another example (not shown), pallet cover 101 may include a sixth thermal insulation member, which may be configured like insulation members 105-1 through 105-5. Said sixth thermal insulation member may be positioned below or in place of temperature-control assembly 103-6. In addition, said example may further include a pair of insulating members 107 positioned within said sixth thermal insulation member.

It is to be understood that thermal insulation wrap 83 could also be removably inserted over pallet cover 101 or the variations thereto discussed herein.

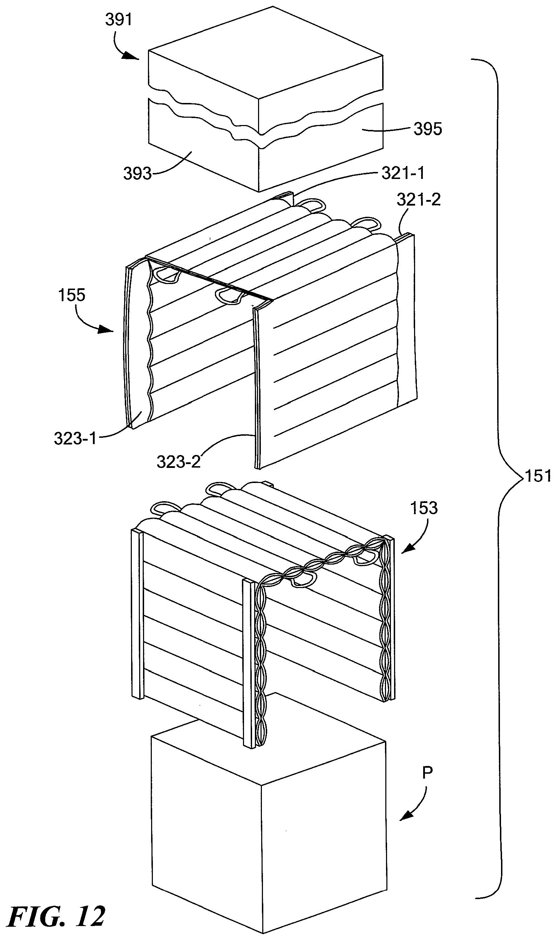

Referring now to Fig. 12, there is shown a partly exploded perspective view of an embodiment of a pallet cover constructed according to the teachings of the present invention, the pallet cover being represented generally by reference numeral 151. (Certain features of pallet cover 151 not critical to the invention may not be shown in Fig. 12 or may be shown therein in a simplified manner.) Pallet cover 151 is shown in Fig. 12 in combination with a payload P, which may be, for example, a 48 inch (long) x 40 inch (wide) × 45 inch payload (high).

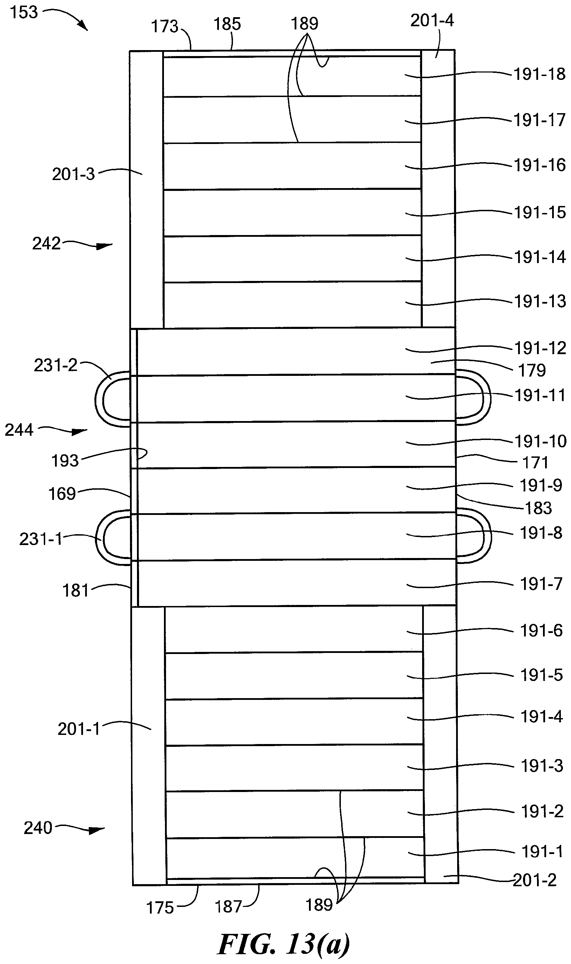

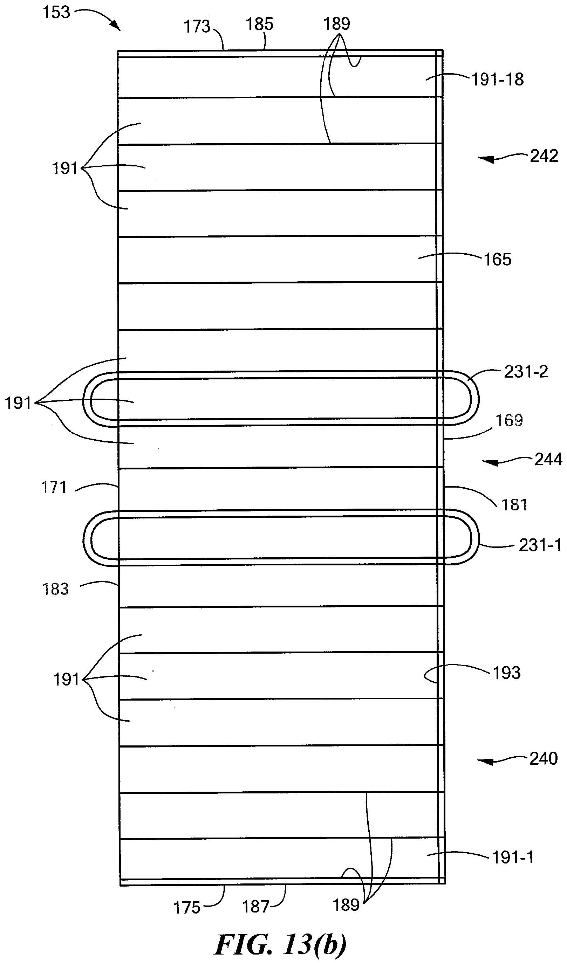

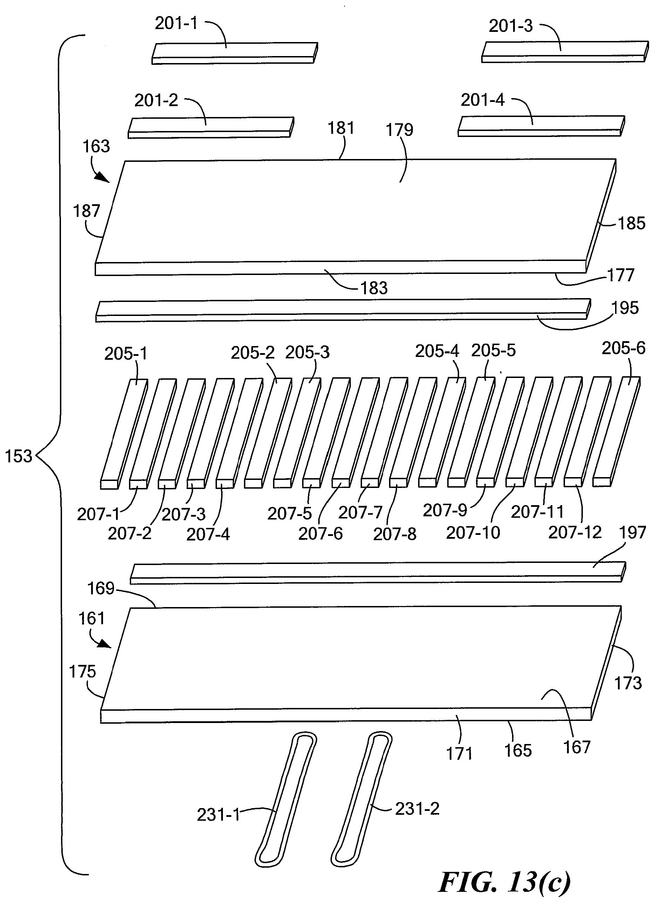

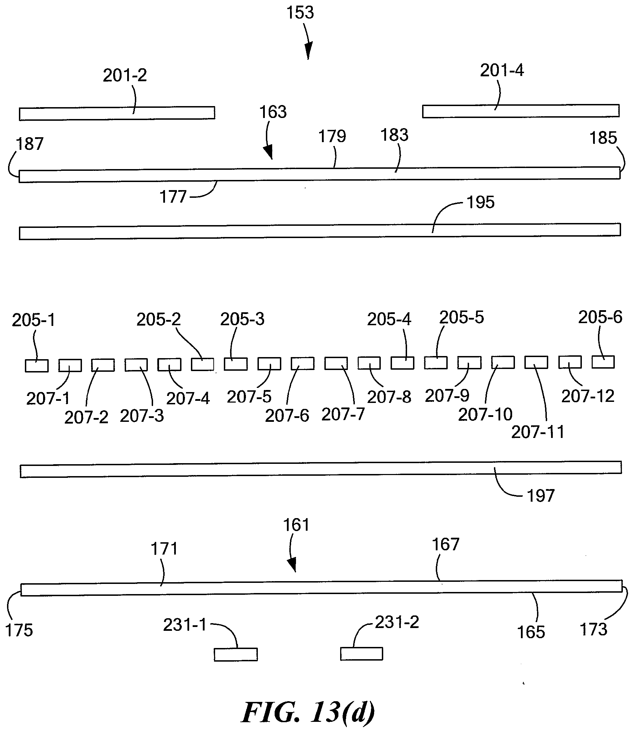

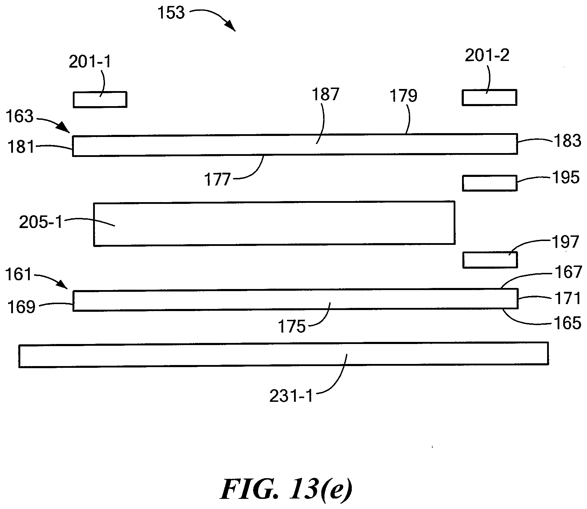

Pallet cover 151 may comprise a first assembly 153 and a second assembly 155. First assembly 153, which is also shown separately in Figs. 13(a) through 13(e), may comprise an inner (i.e., proximate to the payload) sheet 161 and an outer (i.e., distal to the payload) sheet 163. Inner sheet 161 and outer sheet 163, which may be similar in material composition to sheets 25 and 27 of pallet cover 11, may be generally rectangular sheets of substantially matching dimensions. Sheet 161 may include an inner face 165, an outer face 167, a first long side 169, a second long side 171, a first short side 173, and a second short side 175. Sheet 163 may include an inner face 177, an outer face 179, a first long side 181, a second long side 183, a first short side 185, and a second short side 187. Sheets 161 and 163, which may be arranged with their respective long and short sides in alignment with one another, may be joined to one another, for example, using stitching or another suitable technique, to define a plurality of seams. For example, sheets 161 and 163 may be stitched together in such a way as to define a plurality of lateral seams 189 that may extend from sides 169 and 181 of sheets 161 and 163, respectively, to sides 171 and 183 of sheets 161 and 163, respectively (or that may extend nearly the entirety of said distance). One of lateral seams 189 may be positioned parallel to and proximate to sides 173 and 185 of sheets 161 and 163, respectively, another of lateral seams 189 may be positioned parallel to and proximate to sides 175 and 187 of sheets 161 and 163, respectively, and the remainder of lateral seams 189 may be evenly spaced therebetween and parallel to one another. In this manner, lateral seams 189 may help to define a plurality of pockets 191 of substantially equal size that may be parallel to one another and that may extend laterally between the respective long sides of sheets 161 and 163.

In addition to being joined together along lateral seams 189, sheets 161 and 163 may also be joined to one another, by stitching or another suitable technique, to define a longitudinal seam 193. Longitudinal seam 193 may extend from sides 173 and 185 of sheets 161 and 163, respectively, to sides 175 and 187 of sheets 161 and 163, respectively, or may extend nearly the entirety of said distance, and may be positioned proximate to sides 169 and 181 of sheets 161 and 163, respectively. In this manner, the end of each pocket 191 proximate to sides 169 and 181 of sheets 161 and 163, respectively, may be permanently closed by longitudinal seam 193.

First assembly 153 may further comprise a releasable fastening mechanism to enable the reversible opening and closing of the end of each pocket 191 that is proximate to sides 171 and 183 of sheets 161 and 163, respectively. Such a releasable fastening mechanism may comprise, for example, strips of complementary hook and loop fasteners. For example, a narrow strip of hook fasteners 195 may be stitched or otherwise secured to the inner face 177 of outer sheet 163 substantially flush with side 183, said strip of hook fasteners 195 extending substantially the entire distance between sides 185 and 187. In addition, a narrow strip of loop fasteners 197 may be stitched or otherwise secured to the outer face 167 of inner sheet 161 substantially flush with side 171, said strip of loop fasteners 197 extending substantially the entire distance between sides 173 and 175 and being appropriately positioned for engagement with said strip of hook fasteners 195. If desired, lateral seams 189 may extend through strips of hook fasteners 195 and loop fasteners 197, thereby permanently joining together portions of the strips of hook fasteners 195 and loop fasteners 197 between sheets 161 and 163. To facilitate the detaching of hook fasteners 195 from loop fasteners 197 in the areas defining the selectively openable/closable ends of pockets 191, one or more fabric tabs (not shown) may be sewn over one or more small portions of hook fasteners 195 and/or loop fasteners 197.

To summarize, sheets 161 and 163 may be joined together to define a plurality of parallel, laterally-extending pockets 191, each of said pockets 191 having a permanently closed end and an open end. The open ends may be reversibly opened and closed with complementary hook and loop fasteners 195 and 197. In the present embodiment, sheets 161 and 163 may be dimensioned and seams 189 and 193 may be positioned so as to define 18 substantially equally-sized, laterally-extending, parallel pockets 191 (which pockets may be individually identified in certain figures or discussed herein as pockets 191-1 through 191-18), each of pockets 191 having a width of approximately 7.5 inches and a length of approximately 39.5 inches. (It is to be understood that the number of pockets 191 and the dimensions thereof are merely illustrative and that variations in the number and/or dimensions of pockets 191 may be made while still coming within the scope of the present invention.)

It is to be understood that, although, in the present embodiment, sheets 161 and 163 are fabricated as two separate pieces, sheets 161 and 163 could be fabricated as a unitary (i.e., one-piece) structure that may be folded or otherwise divided into two sections and thereafter stitched or otherwise secured to one another in substantially the manner described above.

First assembly 153 may further comprise a mechanism for use in detachably coupling first assembly 153 to second assembly 155. For example, such a mechanism may comprise complementary hook and loop fasteners. More specifically, in the present embodiment, first assembly 153 may comprise hook fasteners, and second assembly 155 may comprise complementary loop fasteners. Such hook fasteners may comprise strips of hook fasteners 201-1 through 201-4, which may be stitched or otherwise secured to the outer face 179 of sheet 163. For example, hook fastener strip 201-1 may be positioned substantially flush with side 181 and may extend over portions of pockets 191-1 through pocket 191-6, hook fastener strip 201-2 may be positioned substantially flush with side 183 and may extend over portions of pockets 191-1 through 191-6, hook fastener strip 201-3 may be positioned substantially flush with side 181 and may extend over portions of pockets 191-13 through 191-18, and hook fastener strip 201-4 may be positioned substantially flush with side 183 and may extend over portions of pockets 191-13 through 191-18.

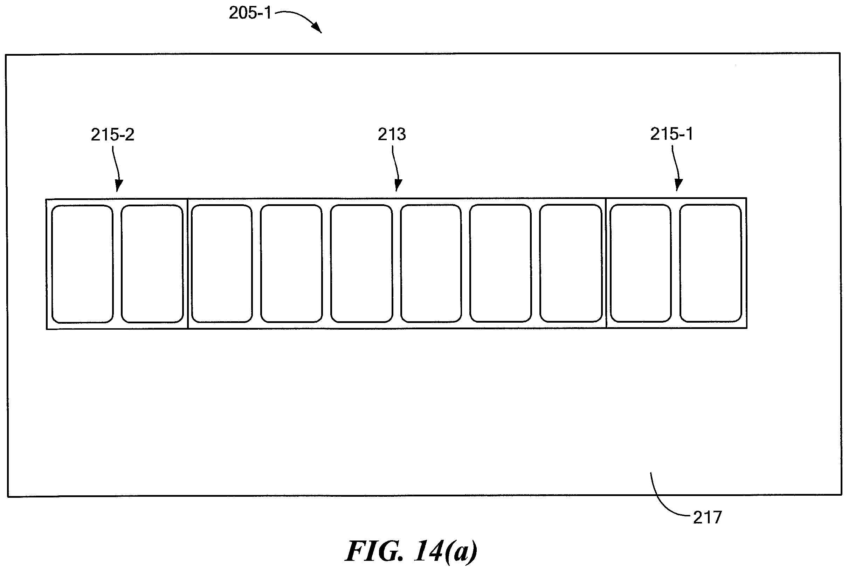

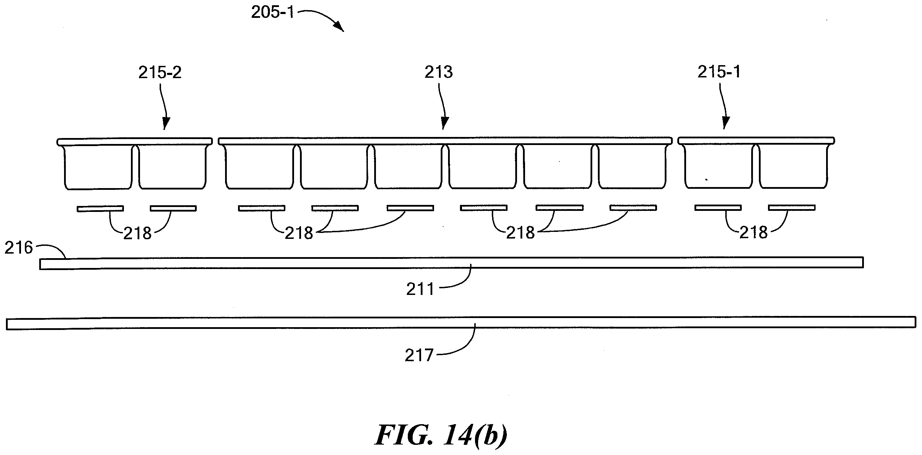

First assembly 153 further comprises a first plurality of temperature-control members 205-1 through 205-6 and a second plurality of temperature-control members 207-1 through 207-12. Members 205-1 through 205-6 may be identical to one another (but need not be), and a representative such member, namely, member 205-1, is shown separately in Figs. 14(a) and 14(b). As can be seen best in Figs. 14(a) and 14(b), member 205-1 may comprise a support 211, one 6-pouch PCM-mat 213, two 2-pouch PCM-mats 215-1 and 215-2, and a sheet of wrapping material 217. Support 211, which may be used to provide structural reinforcement to member 205-1, may be made of a lightweight but rigid material. An example of a suitable material for use as support 211 may include corrugated cardboard. Support 211 may be fashioned as a unitary (i.e., one-piece) structure and may be dimensioned to extend nearly the full length and width of a pocket 191.

PCM-mat 213 and PCM-mats 215-1 and 215-2 may be similar in structure and composition to one another and to temperature-control member 37 (but need not be), the only difference being in the number of pouches of the respective mats. PCM-mat 213, which may have a width similar to that of support 211, may be centered along the length of support 211 and may be secured to a top surface 216 of support 211 with double-sided tape 218. PCM-mats 215-1 and 215-2, each of which may have a width similar to that of support 211, may be positioned at opposite ends of PCM-mat 213 and may be secured to top surface 216 of support 211 with double-sided tape 218. Collectively PCM-mats 213, 215-1 and 215-2 may approximate the length of support 211. (In the present embodiment, PCM-mats 213, 215-1 and 215-2 may have a collective length that is slightly greater than support 211, but said mats may be mounted on support 211 in a slightly overlapping manner to approximate the length of support 211.) It is to be understood that, although PCM-mats 213, 215-1 and 215-2 may be constructed as three separate mats in the present embodiment, such mats could be constructed as a single continuous mat. As can be appreciated, any of the phase-change materials discussed in this patent application may be used in any of PCM-mats 213, 215-1 and 215-2. Moreover, one or more of PCM-mats 213, 215-1 and 215-2 may be replaced with conventional ice packs, conventional gel packs, conventional salt water packs, or other conventional refrigerant structures.

Wrapping material 217, which may be, for example, a sheet of shrink-wrap material, may be shrink-wrapped around mats 213, 215-1 and 215-2 and support 211 to help keep mats 213, 215-1 and 215-2 stationary on support 211.

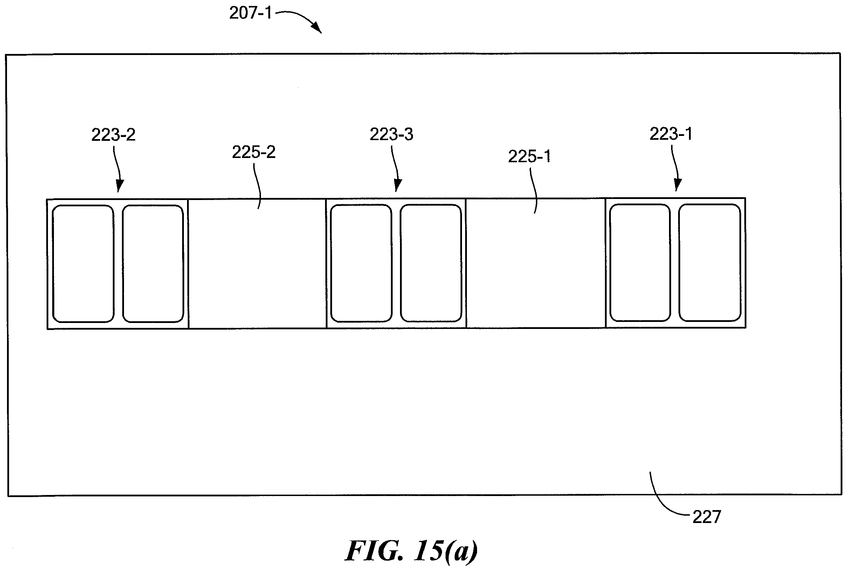

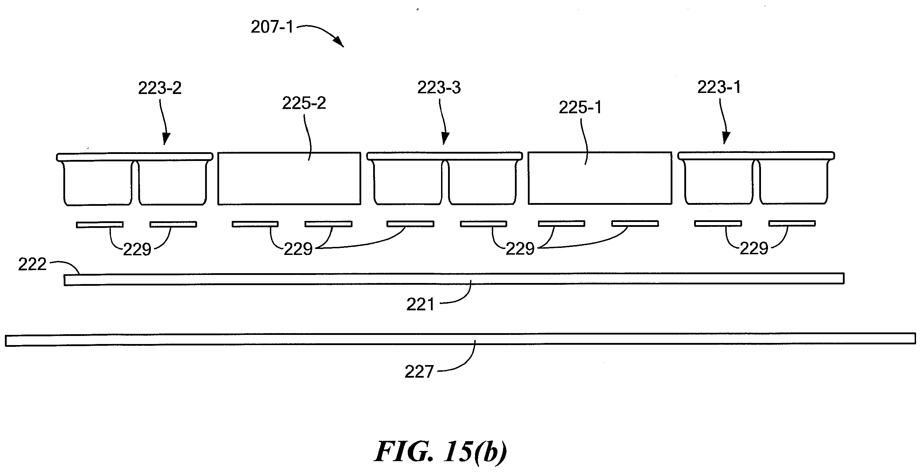

Members 207-1 through 207-12 may be identical to one another (but need not be), and a representative such member, namely, member 207-1, is shown separately in Figs. 15(a) and 15(b). As can be seen best in Figs. 15(a) and 15(b), member 207-1 may comprise a support 221, three 2-pouch PCM-mats 223-1, 223-2 and 223-3, two insulation members 225-1 and 225-2, and a sheet of wrapping material 227. Support 221 may be identical to support 211 of member 205-1 and may be similarly dimensioned to extend nearly the full length and width of a pocket 191. PCM-mats 223-1 through 223-3 may be identical to PCM-mats 215-1 and 215-2 of temperature-control member 205-1 (but need not be), with PCM-mat 223-1 being positioned on a top surface 222 of support 221 at one end thereof, PCM-mat 223-2 being positioned on top surface 222 of support 221 at the opposite end thereof, and PCM-mat 223-3 being positioned on top surface 222 of support 221 approximately equidistantly between PCM-mats 223-1 and 223-2. PCM-mats 223-1 through 223-3 may be securely mounted on top surface 222 of support 221 with strips of double-sided adhesive tape 229. Insulation members 225-1 and 225-2 may be identical to one another and may be made of a suitable thermal insulating material, such as a pad of an open-cell polyurethane foam. Insulation member 225-1 may be positioned on top surface 222 of support 221 and may be appropriately sized to substantially fill the space between PCM-mats 223-1 and 223-3, and insulation member 225-2 may be positioned on top surface 222 of support 221 and may be appropriately sized to substantially fill the space between PCM-mats 223-2 and 223-3. Insulation members 225-1 and 225-2 may be securely mounted on top surface 222 of support 221 with strips of double-sided adhesive tape 229. As can be appreciated, any of the phase-change materials discussed in this patent application may be used in any of PCM-mats 223-1, 223-2 and 223-3. Moreover, one or more of PCM-mats 223-1, 223-2, and 223-3 may be replaced with conventional ice packs, conventional gel packs, conventional salt water packs, or other conventional refrigerant structures.

Wrapping material 227, which may be identical to wrapping material 217 of temperature-control member 205-1, may be shrink-wrapped around mats 223-1, 223-2 and 223-3, insulation members 225-1 and 225-2, and support 211 to help keep mats 223-1, 223-2, 223-3 and insulation members 225-1 and 225-2 stationary on support 221.

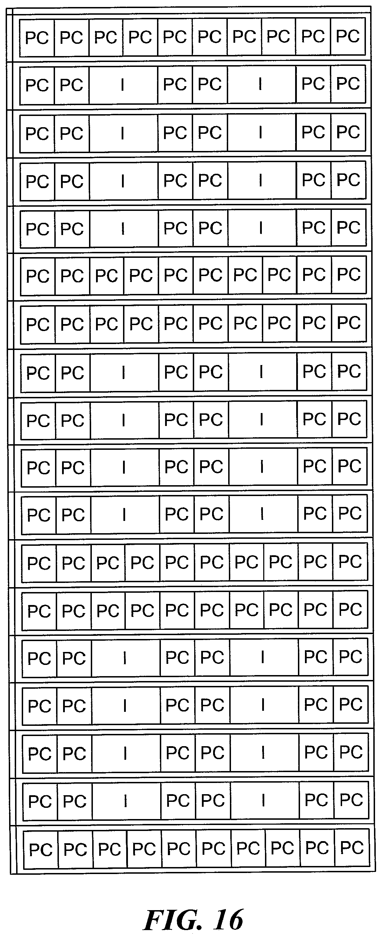

Members 205-1 through 205-6 may be removably loaded in pockets 191-1, 191-6, 191-7, 191-12, 191-13 and 191-18, respectively, and members 207-1 through 207-12 may be removably loaded in pockets 191-2, 191-3, 191-4, 191-5, 191-8, 191-9, 191-10, 191-11, 191-14, 191-15, 191-16 and 191-17, respectively. When loaded in this manner, members 205-1 through 205-6 and members 207-1 through 207-12 may form a pattern of phase-change material PC and insulation I that is schematically shown in Fig. 16. As will become apparent below, when first assembly 153 is in use on a payload, such a pattern resembles a bisected windowpane on the top and two opposing sides of a payload. Such an arrangement places phase-change material predominantly in the peripheral areas of the payload, where thermal protection is needed most, while minimizing the weight and cost of the assembly. In the present embodiment, the same type and quantity of phase-change material is used for each location of phase-change material PC (and the phase-change material may be a gelled phase-change material of the type described above - but need not be); however, it should be understood that the type and/or quantity of phase-change material need not be the same for each location of phase-change material PC. For example, phase-change materials having different phase-change temperatures may be positioned at different locations of phase-change material PC. Moreover, it should be understood that other patterns of phase-change material may be used, such as, but not limited to, the replacement of some or all insulation with phase-change material or vice versa.

First assembly 153 may further comprise a pair of handles 231-1 and 231-2. Each of handles 231-1 and 231-2 may comprise a strip of material that may be similar in composition to that of sheet 161 and/or sheet 163 and that may be formed into a loop and secured, for example, by stitching, to inner face 165 of sheet 161. Handle 231-1 may be secured to sheet 161 along the seam between pockets 191-7 and 191-8 and along the seam between pockets 191-8 and 191-9, with the ends of handle 231-1 extending short distances laterally beyond sides 169 and 171. Handle 231-2 may be secured to sheet 161 along the seam between pockets 191-10 and 191-11 and along the same between pockets 191-11 and 191-12, with the ends of handle 231-2 extending short distances laterally beyond sides 169 and 171.

First assembly 153 may be regarded as being divided into a first end section 240, a second end section 242, and an intermediate section 244, first end section 240 including pockets 191-1 through 191-6, second end section 242 including pockets 191-7 through 191-12, and intermediate section including pockets 191-13 through 191-18. As can be seen in Fig. 12, when pallet cover 151 is in use, first end section 240 may be positioned along one side of a payload, second end section 242 may be positioned along an opposite side of a payload, and intermediate section 242 may be positioned over the payload.

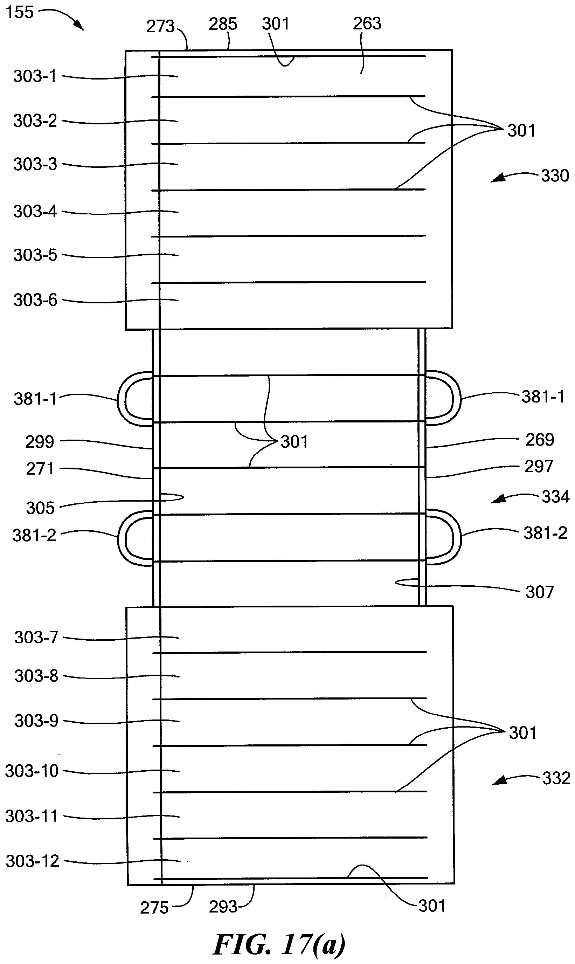

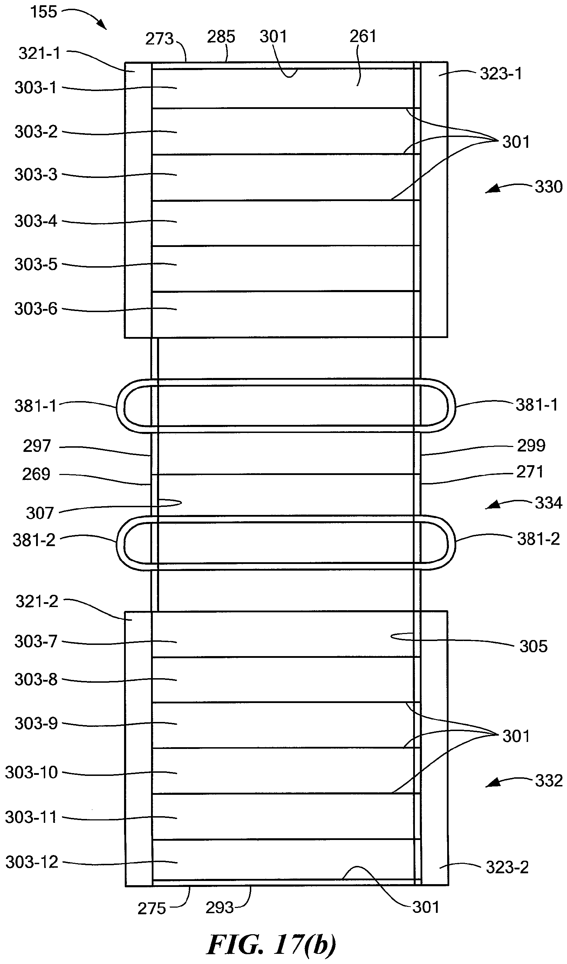

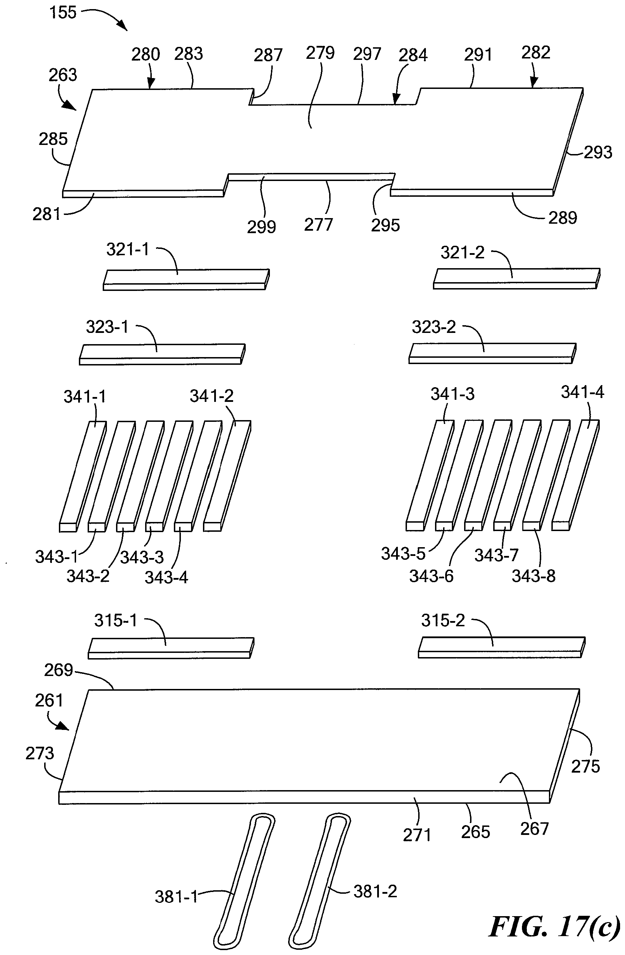

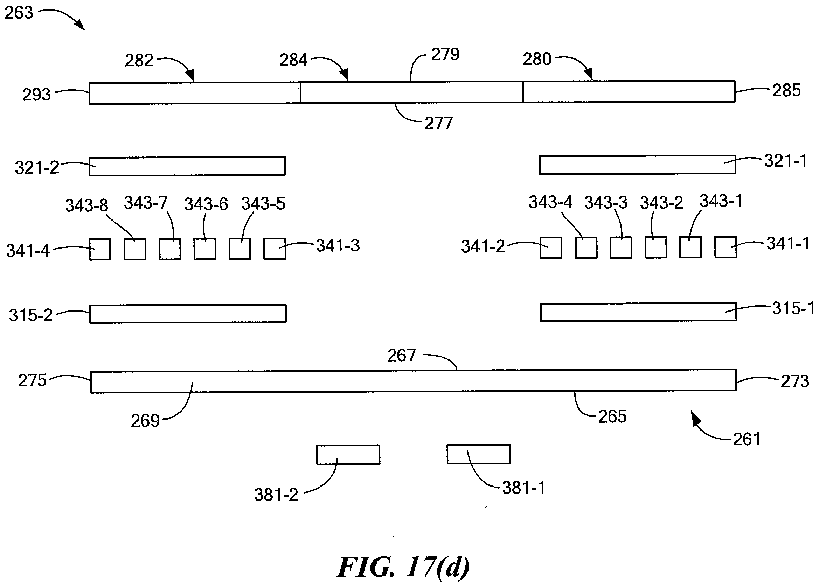

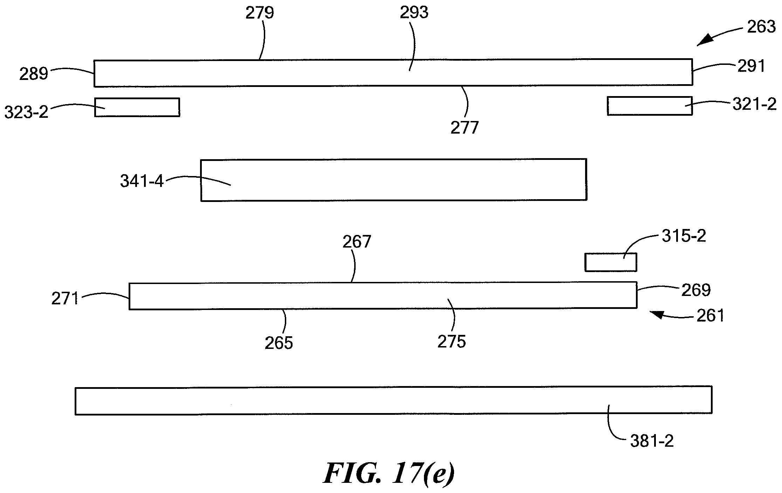

Second assembly 155, which is also shown separately in Figs. 17(a) through 17(e), may comprise an inner (i.e., proximate to the payload) sheet 261 and an outer (i.e., distal to the payload) sheet 263. Inner sheet 261 and outer sheet 263 may be similar in material composition to sheets 161 and 163. Inner sheet 261 may be generally rectangular and may include an inner face 265, an outer face 267, a first long side 269, a second long side 271, a first short side 273, and a second short side 275. Sheet 263, which may include an inner face 277 and an outer face 279, may be an I-shaped structure that may include a first end section 280, a second end section 282, and an intermediate section 284. First end section 280 and second end section 282 may be dimensioned to have equal lengths to one another and to have equal widths to one another whereas intermediate section 284 may have a reduced length and a reduced width as compared to first end section 280 and second end section 282. First end section 280 may include a first side 281, a second side 283, a first end 285, and a second end 287, second end section 282 may include a first side 289, a second side 291, a first end 293, and a second end 295, and intermediate section 284 may include a first side 297 and a second side 299.

Sheets 261 and 263 may be appropriately dimensioned relative to one another so that sides 273 and 275 of sheet 261 may be aligned with ends 285 and 293, respectively, of sheet 263 and so that sides 269 and 271 of sheet 261 may be aligned with sides 297 and 299, respectively, of sheet 263. With sheets 261 and 263 thus aligned, sides 281 and 283 of end portion 280 and sides 289 and 291 of end portion 282 may extend laterally for short distances beyond sides 269 and 271 of sheet 261. Sheets 261 and 263 may be joined to one another, for example, using stitching or another suitable technique, to define a plurality of seams. For example, sheets 261 and 263 may be stitched together in such a way as to define a plurality of lateral seams 301 that may extend from side 269 of sheet 261 to side 271 of sheet 261 (or that may extend nearly the entirety of said distance), as well as over the corresponding portions of sheet 263. One of lateral seams 301 may be positioned parallel to and proximate to side 273 of sheet 261 and end 285 of sheet 263, another of lateral seams 301 may be positioned parallel to and proximate to side 275 of sheet 261 and end 293 of sheet 263, respectively, and the remainder of lateral seams 301 may be positioned therebetween and parallel to one another. In this manner, lateral seams 301 may help to define a plurality of pockets 303 that may be parallel to one another and that may extend laterally between the sides 269 and 271 of sheet 261. Some of these pockets 303 (which may be individually identified in certain figures or discussed herein as pockets 303-1 through 303-6) may be formed by the joinder of end portion 280 to sheet 261, and other of these pockets 303 (which may be individually identified in certain figures or discussed herein as pockets 303-7 through 303-12) may be formed by the joinder of end portion 282 to sheet 261.

In addition to being joined together along lateral seams 301, sheets 261 and 263 may also be joined to one another, by stitching or another suitable technique, to define a first longitudinal seam 305 and a second longitudinal seam 307. First longitudinal seam 305 may extend from side 273 of sheet 261 and end 285 of sheet 263 to side 275 of sheet 261 and end 293 of sheet 263, respectively, or may extend nearly the entirety of said distance, and may be positioned proximate to sides 271 and 299 of sheet 261 and 263, respectively. In this manner, the end of each pocket 303 proximate to sides 271 and 299 of sheets 261 and 263, respectively, may be permanently closed by longitudinal seam 305. Second longitudinal seam 307 may extend from a location corresponding to end 287 of sheet 263 to a location corresponding to end 295 of sheet 263, or may extend nearly the entirety of said distance, and may be positioned proximate to sides 269 and 297 of sheets 261 and 263, respectively. In this manner, the portion of sheet 261 that is joined to intermediate portion 284 may be permanently closed on all four sides. As will be apparent below, the foregoing portion of sheet 261 that is joined to intermediate portion 284 may be devoid of any temperature-control members.

Second assembly 155 may further comprise a releasable fastening mechanism to enable the reversible opening and closing of the end of each pocket 303 that is proximate to side 269 of sheet 261. Such a releasable fastening mechanism may comprise, for example, strips of complementary hook and loop fasteners. For example, a first strip of hook fasteners 315-1 may be stitched or otherwise secured to outer face 267 of inner sheet 261 substantially flush with side 269, said first strip of hook fasteners 315-1 corresponding generally in length to the length of side 283 of end portion 280 and being aligned with end portion 280 of sheet 263. In addition, a second strip of hook fasteners 315-2 may be stitched or otherwise secured to outer face 267 of inner sheet 261 substantially flush with side 269, said second strip of hook fasteners 315-2 corresponding generally in length to the length of side 291 of end portion 282 and being aligned with end portion 282 of sheet 263. Moreover, a first strip of loop fasteners 321-1 may be stitched or otherwise secured to the inner face 277 of outer sheet 263 substantially flush with side 283 of end portion 280, and a second strip of loop fasteners 321-2 may be stitched or otherwise secured to inner face 277 of outer sheet 263 substantially flush with side 291 of end portion 282. Strips of loop fasteners 321-1 and 321-2 may correspond in length to strips of hook fasteners 315-1 and 315-2; however, strips of loop fasteners 321-1 and 321-2 may be wider than strips of hook fasteners 315-1 and 315-2. In this manner, loop fasteners 321-1 and 321-2 may be used not only to mate with hook fasteners 315-1 and 315-2, respectively, to reversibly open and close pockets 303 but also to mate with nearby hook fasteners 201 of first assembly 153 when second assembly 155 is positioned over first assembly 153 (after appropriately bending the respective lateral sides of end portions 280 and 282), thereby enabling first assembly 153 and second assembly 155 to be reversibly joined to one another. In a similar fashion, a first strip of loop fasteners 323-1 may be stitched or otherwise secured to the inner face 277 of outer sheet 263 substantially flush with side 281 of end portion 280, and a second strip of loop fasteners 323-2 may be stitched or otherwise secured to the inner face 277 of outer sheet 263 substantially flush with side 289 of end portion 282. Strips of loop fasteners 323-1 and 323-2 may be sufficiently wide so as to be secured to outer sheet 263 by longitudinal seam 305 and to mate with nearby hook fasteners 201 of first assembly 153 when second assembly 155 is positioned over first assembly 153 (after appropriately bending the respective lateral sides of end portions 280 and 282).

It is to be understood that, although, in the present embodiment, sheet 263 is wider than sheet 261, sheets 261 and 263 could have matching dimensions, with strips of loop fasteners 321-1, 321-2, 323-1 and 323-2 extending laterally beyond the sides of sheets 261 and 263.

If desired, lateral seams 301 may extend through strips of hook fasteners 315-1 and 315-2 and loop fasteners 321-1 and 321-2, thereby permanently joining together portions of the strips of hook fasteners 315-1 and 315-2 and loop fasteners 321-1 and 321-2 between sheets 261 and 263. (Lateral seams 301 may also extend through strips of loop fasteners 323-1 and 323-2.) To facilitate the detaching of hook fasteners 315-1 and 315-2 from loop fasteners 321-1 and 321-2 in the areas defining the selectively openable/closable ends of pockets 303, one or more fabric tabs (not shown) may be sewn over one or more small portions of hook fasteners 315-1 and 315-2 and/or loop fasteners 321-1 and 321-2.

To summarize, sheets 261 and 263 may be joined together to define a first end section 330 comprising a plurality of parallel, laterally-extending pockets 303-1 through 303-6, a second end section 332 comprising a plurality of parallel, laterally-extending pockets 303-7 through 303-12, and a central section 334 of narrowed length and width interconnecting end sections 330 and 332. Each of pockets 303-1 through 303-12 may have a permanently closed end and an open end. The open ends may be reversibly opened and closed with complementary hook and loop fasteners 315-1 and 315-2 and 321-1 and 321-2. The loop fasteners 321-1 and 321-2 not only may be used to mate with the hook fasteners 315-1 and 315-2 to reversibly open and close pockets 303 but also may be used to mate with hook fasteners 201 on first assembly 153 to detachably couple first assembly 153 to second assembly 155. Additional loop fasteners 323-1 and 323-2 positioned proximate to the permanently closed ends of pockets 303 may also be used to mate with other hook fasteners 201 on first assembly 153 to detachably couple first assembly 153 to second assembly 155. In the present embodiment, each of pockets 303-1 through 303-12 may have a width of approximately 7.5 inches and a length of approximately 47 inches. (It is to be understood that the number of pockets 303 and the dimensions thereof are merely illustrative and that variations in the number and/or dimensions of pockets 303 may be made while still coming within the scope of the present invention.) As can be seen in Fig. 12, when pallet cover 151 is in use, second assembly 155 may be offset relative to first assembly 153, with first end section 330 positioned along a side of the payload P uncovered by first assembly 153, second end section 332 positioned along an opposite side of the payload P uncovered by first assembly 153, and intermediate section 334 positioned over the payload P.

It is to be understood that, although, in the present embodiment, sheets 261 and 263 are fabricated as two separate pieces, sheets 261 and 263 could be fabricated as a unitary (i.e., one-piece) structure that may be folded or otherwise divided into two sections and thereafter stitched or otherwise secured to one another in substantially the manner described above.

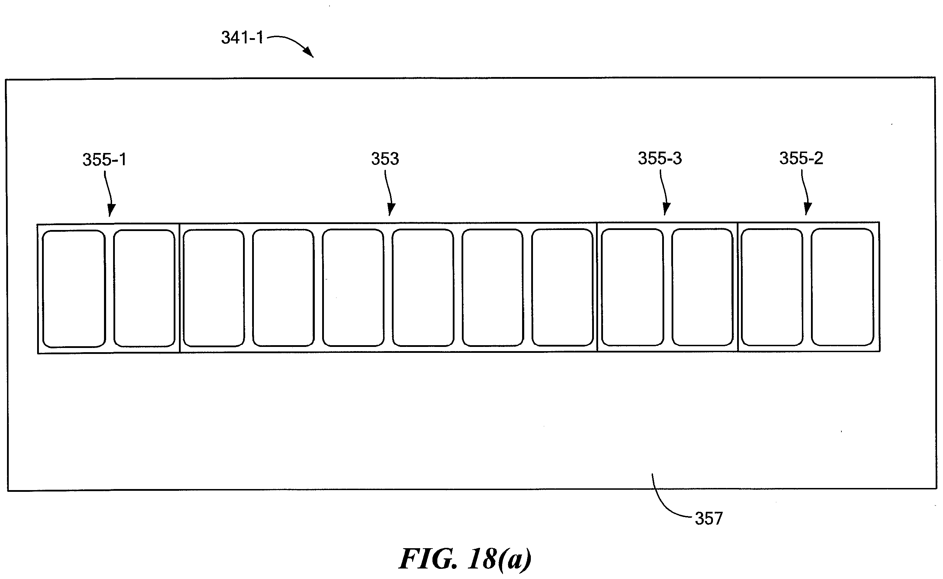

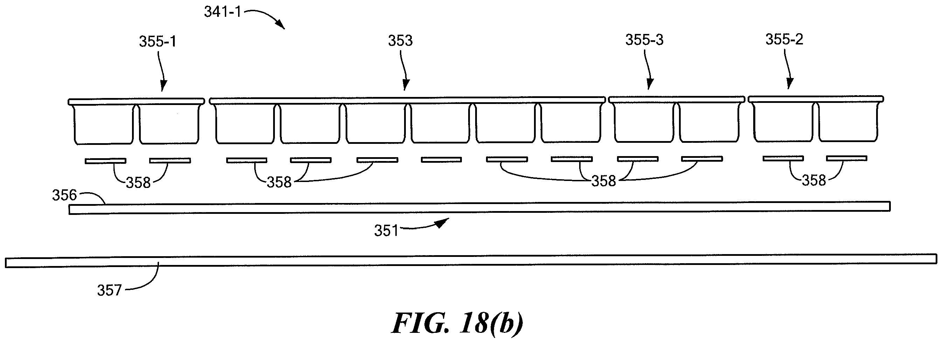

Second assembly 155 may further comprise a first plurality of temperature-control members 341-1 through 341-4 and a second plurality of temperature-control members 343-1 through 343-8. Members 341-1 through 341-4 may be identical to one another (but need not be), and a representative such member, namely, member 341-1, is shown separately in Figs. 18(a) and 18(b). As can be seen best in Figs. 18(a) and 18(b), member 341-1 may comprise a support 351, one 6-pouch PCM-mat 353, three 2-pouch PCM-mats 355-1 through 355-3, and a sheet of wrapping material 357. Support 351, which may be used to provide structural reinforcement to member 341-1, may be made of a lightweight but rigid material. An example of a suitable material for use as support 351 may include corrugated cardboard. Support 351 may be fashioned as a unitary (i.e., one-piece) structure and may be dimensioned to extend nearly the full length and width of a pocket 303.

PCM-mat 353 may be identical to PCM-mat 213 (but need not be), and PCM-mats 355-1 through 355-3 may be identical to PCM-mats 215-1 and 215-2 (but need not be). PCM-mats 355-1 and 355-2, each of which may have a width similar to that of support 351, may be positioned at opposite ends of support 351 and may be secured to a top surface 356 of support 351 with double-sided tape 358. PCM-mats 353 and 355-3, each of which may have a width similar to that of support 351, may be positioned on support 351 between PCM-mats 355-1 and 355-2 and may be secured to a top surface 356 of support 351 with double-sided tape 358. Collectively PCM-mats 353 and 355-1 through 355-3 may approximate the length of support 351. (In the present embodiment, PCM-mats 353 and 355-1 through 355-3 may have a collective length that is slightly greater than that of support 351, but they may be mounted on support 351 in a slightly overlapping manner to approximate the length of support 351.) It is to be understood that, although PCM-mats 353 and 355-1 through 355-3 may be constructed as four separate mats in the present embodiment, such mats could be constructed as a single continuous mat. As can be appreciated, any of the phase-change materials discussed in this patent application may be used in any of PCM-mats 353, 355-1, 355-2 and 355-3. Moreover, one or more of PCM-mats 353, 355-1, 355-2 and 355-3 may be replaced with conventional ice packs, conventional gel packs, conventional salt water packs, or other conventional refrigerant structures.

Wrapping material 357, which may be, for example, a sheet of shrink-wrap material, may be shrink-wrapped around mats 353, 355-1, 355-2 and 355-3 and support 351 to help keep mats 353, 355-1, 355-2, and 355-3 stationary on support 351.

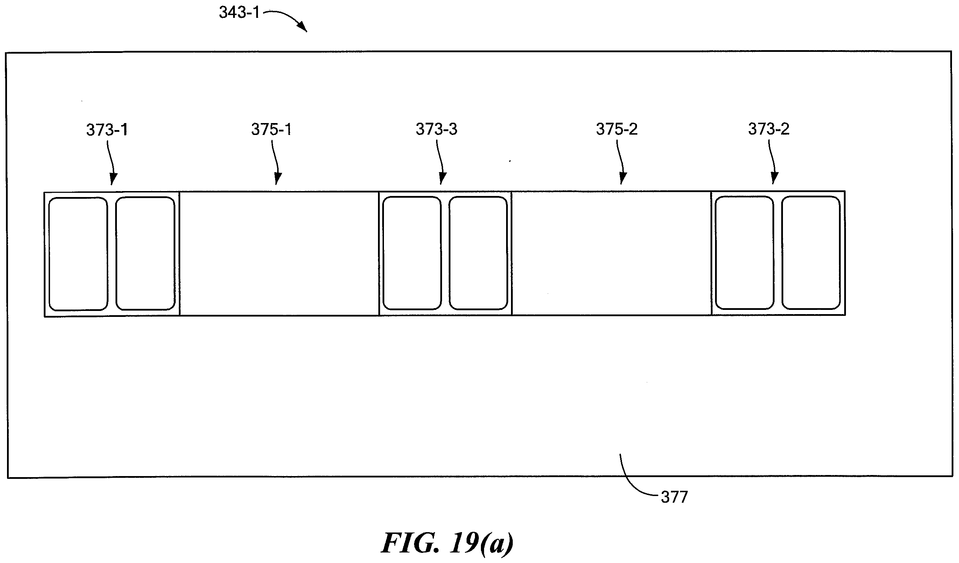

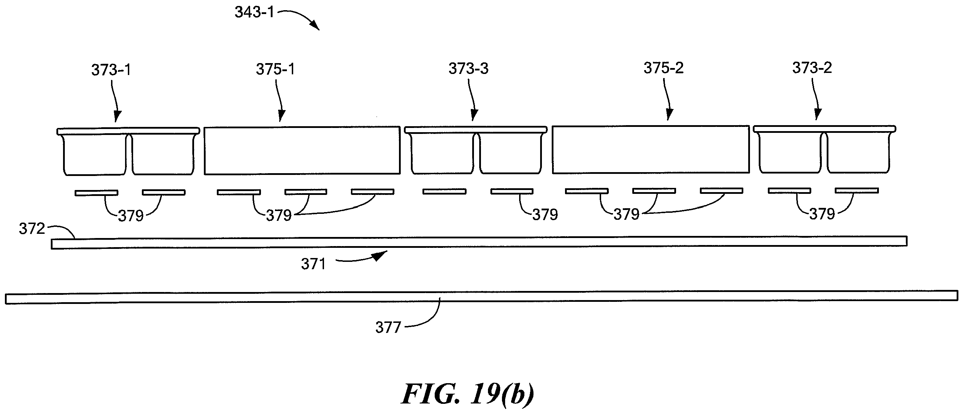

Members 343-1 through 343-8 may be identical to one another (but need not be), and a representative such member, namely, member 343-1, is shown separately in Figs. 19(a) and 19(b). As can be seen best in Figs. 19(a) and 19(b), member 343-1 may comprise a support 371, three 2-pouch PCM-mats 373-1, 373-2 and 373-3, two insulation members 375-1 and 375-2, and a sheet of wrapping material 377. Support 371 may be identical to support 351 of member 341-1 and may be similarly dimensioned to extend nearly the full length and width of a pocket 303. PCM-mats 373-1 through 373-3 may be identical to PCM-mats 355-1 through 355-3 of temperature-control member 341-1 (but need not be), with PCM-mat 373-1 being positioned on a top surface 372 of support 371 at one end thereof, PCM-mat 373-2 being positioned on top surface 372 of support 371 at the opposite end thereof, and PCM-mat 373-3 being positioned on top surface 372 of support 371 approximately equidistantly between PCM-mats 373-1 and 373-2. PCM-mats 373-1 through 373-3 may be securely mounted on top surface 372 of support 371 with strips of double-sided adhesive tape 379. Insulation members 375-1 and 375-2 may be identical to one another and may be made of a suitable thermal insulating material, such as a pad of an open-cell polyurethane foam. Insulation member 375-1 may be positioned on top surface 372 of support 371 and may be appropriately sized to substantially fill the space between PCM-mats 373-1 and 373-3, and insulation member 375-2 may be positioned on top surface 372 of support 371 and may be appropriately sized to substantially fill the space between PCM-mats 373-2 and 373-3. Insulation members 375-1 and 375-2 may be securely mounted on top surface 372 of support 371 with strips of double-sided adhesive tape 379. As can be appreciated, any of the phase-change materials discussed in this patent application may be used in any of PCM-mats 373-1, 373-2 and 373-3. Moreover, one or more of PCM-mats 373-1, 373-2 and 373-3 may be replaced with conventional ice packs, conventional gel packs, conventional salt water packs, or other conventional refrigerant structures.

Wrapping material 377, which may be identical to wrapping material 357 of temperature-control member 341-1, may be shrink-wrapped around mats 373-1, 373-2 and 373-3, insulation members 375-1 and 375-2, and support 371 to help keep mats 373-1, 373-2, 373-3 and insulation members 375-1 and 375-2 stationary on support 371.

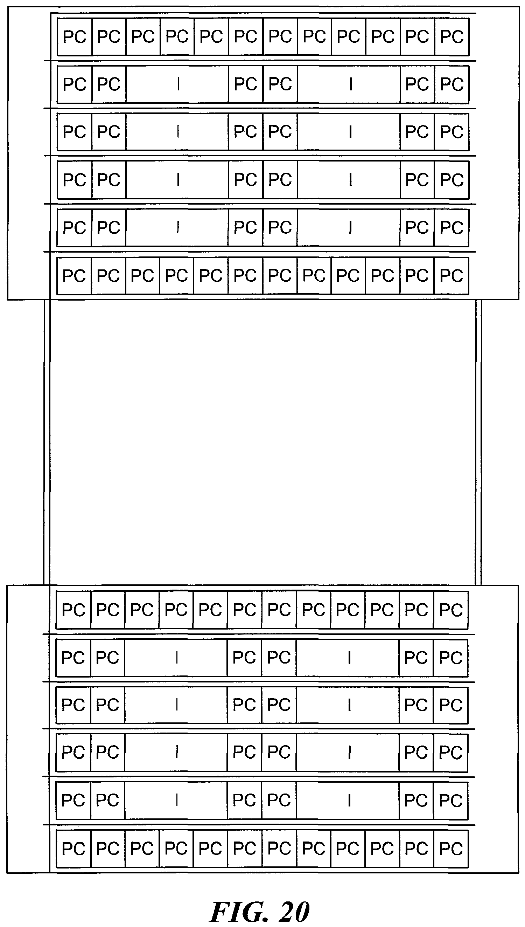

Members 341-1 through 341-4 may be loaded in pockets 303-1, 303-6, 303-7 and 303-12, respectively, and members 343-1 through 343-8 may be loaded in pockets 303-2, 303-3, 303-4, 303-5, 303-8, 303-9, 303-10, and 303-11, respectively. In this manner, members 341-1 through 341-4 and members 343-1 through 343-8 may form a pattern of phase-change material PC and insulation I that is schematically shown in Fig. 20. As will become apparent below, when second assembly 155 is in use on a payload, such a pattern resembles a bifurcated windowpane on two opposing sides of a payload (second assembly 155 not positioning any temperature-control members over the payload). Such an arrangement places phase-change material predominantly in the peripheral areas of the payload, where thermal protection is needed most, while minimizing the weight and cost of the assembly. In the present embodiment, the same type and quantity of phase-change material is used for each location of phase-change material PC within second assembly 155 - but need not be. Moreover, the same type and quantity of phase-change material is preferably used in both first assembly 153 and second assembly 155; however, it should be understood that the type and/or quantity of phase-change material need not be the same for each location of phase-change material PC and/or need not be the same for both first assembly 153 and second assembly 155. For example, different types and/or quantities of phase-change materials may be present in different pouches or different containers within the same pocket and/or different types and/or quantities of phase-change materials may be present in different pockets within the same assembly 153 or assembly 155 and/or different types and/or quantities of phase-change materials may be present in assemblies 153 and 155. This may be done, for example, to provide increased thermal protection in selected areas, such as along the peripheries of one or more of the walls. Moreover, it should be understood that other patterns of phase-change material may be used, such as, but not limited to, the replacement of some or all insulation with a phase-change material, which may be the same or different than that in the phase-change material PC locations, or vice versa. As an example of the foregoing, one could replace the locations containing insulation with a phase-change material having a different (e.g., higher) phase-change temperature than the phase-change material in the locations currently containing phase-change material.

Second assembly 155 may further comprise a pair of handles 381-1 and 381-2. Each of handles 381-1 and 381-2 may comprise a strip of material that may be similar in composition to that of sheet 261 and/or sheet 263 and that may be formed into a loop and secured, for example, by stitching, to inner face 265 of sheet 261. Handles 381-1 and 383-2 may be secured to the portion of sheet 261 positioned below intermediate portion 284 of sheet 263, with the ends of handles 381-1 and 381-2 extending short distances laterally beyond sides 269 and 271. Handles 381-1 and 381-2 may be generally parallel to one another.

As can be appreciated, one or both of assemblies 153 and 155 may be modified in one or more of the panels thereof to include an insulation layer of the type shown in Fig. 8.

As can also be appreciated, one or both of assemblies 153 and 155 may be modified to further include an additional panel or other structure that may be positioned below the payload. Such a structure may include, but need not include, one or more temperature-control members as described above or other types of temperature-control members including phase-change material. Alternatively, the structure for positioning under the payload may be a physically discrete structure from assemblies 153 and 155. Moreover, the structure may be a pallet assembly comprising phase-change material, such a pallet assembly being disclosed, for example, in U.S. Patent Application Publication No. US 2013/0015191 A1, inventors Seagle et al., published January 17, 2013.

Pallet cover 151 may further comprise a wrap 391. Wrap 391 may be similar in composition to wrap 83 of pallet cover 81 and may be appropriately dimensioned to be positioned over substantially the entireties of first assembly 153 and second assembly 155 after first assembly 153 and second assembly 155 have been positioned on a payload P. Wrap 391, which may be a five-sided structure fashioned as a unitary structure, may include a first side 393 and a second side 395 that may be detachably joined to one another with complementary hook and loop fasteners (not shown) to facilitate the mounting and removal of wrap 391 relative to first assembly 153 and second assembly 155.

In use, assembly 153 may be arranged relative to a payload P so that pockets 191-1 through 191-6 are positioned along one of the two shorter sides of the payload P (i.e., one of the 40-inch sides), so that pockets 191-7 through 191-12 are positioned on top of the payload P, and so that pockets 191-13 through 191-18 are positioned along the other of the two shorter sides of the payload P. In this manner, the portion of assembly 153 relating to pockets 191-1 through 191-6, including the temperature-control members associated therewith, may function as a front wall of cover 151, the portion of assembly 153 relating to pockets 191-13 through 191-18, including the temperature-control members associated therewith, may function as a rear wall, and the portion of assembly 153 relating to pockets 191-7 through 191-12, including the temperature-control members associated therewith, may function as a part of a top wall. Next, assembly 155 may be arranged so that pockets 303-1 through 303-6 are positioned along one of the two longer sides of the payload P (i.e., one of the 48-inch sides), so that pockets 303-7 through 303-12 are positioned along the other of the two longer sides of the payload P, and so that the remainder of second assembly 155 is positioned over that portion of first assembly 153 that is positioned over the payload P. In this manner, the portion of assembly 155 relating to pockets 303-1 through 303-6, including the temperature-control members associated therewith, may function as a first side wall, the portions of assembly 155 relating to pockets 303-7 through 303-12, including the temperature-control members associated therewith, may function as a second side wall, and the remaining portion of assembly 155, together with the underlying portion of assembly 153, may function as a top wall. Next, the adjacent walls of assemblies 153 and 155 may be detachably joined to one another by mating strip of hook fasteners 201-2 to strip of loop fasteners 323-2, by mating strip of hook fasteners 201-1 to strip of loop fasteners 323-1, by mating strip of hook fasteners 201-4 to loop fasteners 321-2, and by mating strip of hook fasteners 201-3 to strip of loop fasteners 321-1. Wrap 391 may then be mounted over the combination of first assembly 153 and second assembly 155.

As can readily be appreciated, prior to using assemblies 153 and 155 in the above-described manner, the various temperature-control units may be pretreated (i.e., preconditioned) at a desired temperature and for a desired duration and then loaded into their respective pockets. In some embodiments, all of the temperature-control units may be preconditioned at the same temperature and/or for the same duration whereas, in other embodiments, some temperature-control units may be preconditioned at different temperatures and/or for different durations than other temperature-control units. For example, where a first temperature-control unit employs a different type of phase-change material than that employed by a second temperature-control unit, it may be desirable, in certain cases, to precondition the first temperature-control unit at a different temperature and/or for a different duration than the second temperature-control unit. As an illustration of the above, a first temperature-control unit may employ a first phase-change material having a comparatively lower phase-change temperature, and a second temperature-control unit may employ a second phase-change material having a comparatively higher phase-change temperature. In such a case, the first temperature-control unit may be preconditioned at a comparatively lower temperature such that the first phase-change material is in a solid state, and the second temperature-control unit may be preconditioned at a comparatively higher temperature such that the second phase-change material is in a liquid state. Alternatively, the first temperature-control and the second temperature-control unit may employ the same phase-change material, but the first temperature-control unit may be preconditioned at a temperature such that its phase-change material is in a solid state whereas the second temperature-control unit may be preconditioned at a temperature such that its phase-change material is in a liquid state.

Alternatively, the preconditioning of the temperature-control units may take place after the temperature-control units have been loaded into their respective pockets.

As can be appreciated, because the temperature-control members of cover 151 may be removably mounted within assemblies 153 and 155 and may be replaced with other temperature-control members having different phase-change temperatures therefrom, one may modify cover 151 so that it is particularly well-suited for maintaining a payload within a particular temperature range. For example, one could employ temperature-control members that are designed to maintain a payload within a temperature range of approximately +2°C to +8°C or, alternatively, could employ temperature-control members that are designed to maintain a payload within a temperature range of approximately +15°C to +25°C or, alternatively, could employ temperature-control members that are designed to maintain a payload within a temperature range of approximately -15°C to -25°C, or, alternatively, could employ temperature-control members that are designed to maintain a payload within a different temperature range. For example, the phase-change material could have a phase-change temperature of 3°C, 5°C, or 7°C and could be preconditioned at 3°C, 5°C, or 7°C, respectively, or could have a phase-change temperature of 17°C and could be preconditioned at about 17°C, or could have a phase-change temperature of about -23°C or -28°C and could be preconditioned at about -23°C or -28°C, respectively.

The lengths of the front, rear and side walls defined by assemblies 153 and 155 may be adjusted by folding and tucking the ends of assemblies 153 and 155 inwardly by one or more pockets. If desired, the temperature-control members of the tucked-in pocket(s) may be removed therefrom and/or the arrangement of remaining temperature-control members may be adjusted to maintain a bisected-windowpane pattern.

In another embodiment (not shown), first assembly 153 and second assembly 155 may be modified so that each of the front, rear, and two side walls may be constructed as a two-piece or multi-piece structure that may be detachably joined together, for example, using complementary strips of VELCRO hook and loop fasteners or another type of releasable fastener.

## Claims

1. A pallet cover (151) suitable for use in covering at least a portion of a payload (P) on a pallet, the pallet cover (151) comprising:
(a) a top wall (244, 334);
(b) a front wall (240);
(c) a rear wall (242);
(d) a left side wall (330); and
(e) a right side wall (332), wherein at least one of said top wall (244, 334), said front wall (240), said rear wall (242), said left side wall (330), and said right side wall (332) comprises a plurality of pockets (191-1 through 191-18, 303-1 through 303-12) capable of receiving a temperature-control member, **characterized in that**
at least one of said top wall (244, 334), said front wall (240), said rear wall (242), said left side wall (330), and said right side wall (332) further comprises a first type of temperature-control member (205-1 through 205-6, 341-1 through 341-4) disposed in a first pocket (191-1, 191-6, 191-7, 191-12, 191-13, 191-18, 303-1, 303-6, 303-7, 303-12) of said plurality of pockets and a second type of temperature-control member (207-1 through 207-12, 343-1 through 343-8) disposed in a second pocket (191-2 through 191-5, 191-8 through 191-11, 191-14 through 191-17, 303-2 through 303-5, 303-8 through 303-11) of said plurality of pockets, wherein the first type of temperature-control member (205-1 through 205-6, 341-1 through 341-4) comprises a first plurality of pouches (213, 215-1, 251-2, 353, 355-1 through 355-3) containing phase-change material, the first plurality of pouches (213, 215-1, 251-2, 353, 355-1 through 355-3) extending substantially across the first pocket (191-1, 191-6, 191-7, 191-12, 191-13, 191-18, 303-1, 303-6, 303-7, 303-12), and wherein the second type of temperature-control member (207-1 through 207-12, 343-1 through 343-8) comprises a second plurality of pouches (223-1 through 223-3, 373-1 through 373-3), each of the second plurality of pouches containing phase-change material, at least some of the second plurality of pouches (223-1 through 223-3, 373-1 through 373-3) being separated from one another within the second pocket (191-2 through 191-5, 191-8 through 191-11, 191-14 through 191-17, 303-2 through 303-5, 303-8 through 303-11) by one or more spacers (225-1, 225-2, 375-1, 375-2), the one or more spacers being one or more pieces of insulation.

2. The pallet cover (151) as claimed in claim 1 wherein the first type of temperature-control member (205-1 through 205-6, 341-1 through 341-4) further comprises a first support (211, 351) and a first wrapping material (217, 357), wherein the first plurality of pouches (213, 215-1, 251-2, 353, 355-1 through 355-3) is positioned on the first support (211, 351), and wherein the first wrapping material (217, 357) is wrapped around the first plurality of pouches (213, 215-1, 251-2, 353, 355-1 through 355-3) and the first support (211, 351) and optionally wherein the second type of temperature-control member (207-1 through 207-12, 343-1 through 343-8) further comprises a second support (221, 371) and a second wrapping material (227, 377), wherein the second plurality of pouches (223-1 through 223-3, 373-1 through 373-3) and the one or more spacers (225-1, 225-2, 375-1, 375-2) are positioned on the second support (221, 371), and wherein the second wrapping material (227, 377) is wrapped around the second plurality of pouches (223-1 through 223-3, 373-1 through 373-3), the one or more spacers (225-1, 225-2, 375-1, 375-2) and the second support (221, 371).

3. The pallet cover (151) as claimed in claim 1 wherein the first type of temperature-control member (205-1 through 205-6, 341-1 through 341-4) comprises a single phase-change material, wherein the second type of temperature-control member (207-1 through 207-12, 343-1 through 343-8) comprises a single phase-change material, and wherein the first type of temperature-control member (205-1 through 205-6, 341-1 through 341-4) and the second type of temperature-control member (207-1 through 207-12, 343-1 through 343-8) comprise the same phase-change material or wherein at least one pouch of the first plurality of pouches (213, 215-1, 251-2, 353, 355-1 through 355-3) and the second plurality of pouches (223-1 through 223-3, 373-1 through 373-3) contains a different phase-change material than at least one other pouch of the first plurality of pouches (213, 215-1, 251-2, 353, 355-1 through 355-3) and the second plurality of pouches (223-1 through 223-3, 373-1 through 373-3).

4. The pallet cover (151) as claimed in claim 1 wherein the top wall (244, 334), the front wall (240), the rear wall (242), the left side wall (330), and the right side wall (332) are formed by the assembly of a first subassembly (153) and a second subassembly (155), the first subassembly (153) comprising a first central portion (244), a first end portion (240) disposed at a first end of the first central portion (244), and a second end portion (242) disposed at a second end of the first central portion (244), the second subassembly (155) comprising a second central portion (334), a first end portion (330) disposed at a first end of the second central portion (334), and a second end portion (332) disposed at a second end of the second central portion (334).

5. The pallet cover (151) as claimed in claim 1 wherein each of said top wall (244, 334), said front wall (240), said rear wall (242), said left side wall (330), and said right side wall (332) comprises a plurality of pockets (191, 303) and optionally wherein the first type of temperature-control member (205-1 through 205-6, 341-1 through 341-4) is disposed within at least some of the pockets and the second type of temperature-control member (207-1 through 207-12, 343-1 through 343-8) is disposed within the remaining pockets.

6. The pallet cover (151) as claimed in claim 1 wherein one end of each pocket (191, 303) is sealed and another end of each pocket is constructed to be reversibly opened and closed.

7. The pallet cover (151) as claimed in claim 1 wherein at least one of said front wall (240), said rear wall (242), said left side wall (330), and said right side wall (332) is adjustable in length.

8. The pallet cover (151) as claimed in claim 4 wherein each of the first end portion (240) of the first subassembly (153), the second end portion (242) of the first subassembly (153), the central portion (244) of the first subassembly (153), the first end portion (330) of the second subassembly (155), and the second end portion (332) of the second subassembly (155) comprises at least one temperature-control member (205, 207, 341, 343) and wherein the central portion (334) of the second subassembly (155) is devoid of a temperature-control member; and wherein the central portion (334) of the second subassembly (155) is mounted over the central portion (244) of the first subassembly (153) and wherein the first and second end portions (240, 242) of the first subassembly (153) are offset relative to the first and second end portions (330, 332) of the second subassembly (155), whereby, when the pallet cover (151) is positioned over a payload on a pallet, the central portions (244, 334) of the first and second subassemblies (153, 155) are positioned substantially over the top of the payload and the first and second end portions (240, 242, 330, 332) of the first and second subassemblies (153, 155) are positioned substantially along the sides of the payload.

9. The pallet cover (151) as claimed in claim 8 wherein the first subassembly (153) and the second subassembly (155) are detachably joined to one another and optionally wherein the first end portion (240) of the first subassembly (153) is detachably joined to each of the first and second end portions (330, 332) of the second subassembly (155), preferably with complementary hook and loop fasteners (201-1, 201-2, 321-1, 321-2), and the second end portion (242) of the first subassembly (153) is detachably joined to each of the first and second end portions (330, 332) of the second assembly (155), preferably with complementary hook and loop fasteners (201-3, 201-4, 323-1, 323-2).

10. The pallet cover (151) as claimed in claim 8 wherein the first subassembly (153) comprises a first pair of sheets (161, 163), the first pair of sheets (161, 163) being joined to one another so as to define therein the central portion (244), the first end portion (240), the second end portion (242), and at least one pocket (191) in each of the central portion (244), the first end portion (240) and the second end portion (242) for receiving at least one temperature-control member (205, 207) and optionally wherein the second subassembly (155) comprises a second pair of sheets (261, 263), the second pair of sheets (261, 263) being joined to one another so as to define therein the central portion (334), the first end portion (330), the second end portion (332), and at least one pocket (303) in each of the first end portion (330) and the second end portion (332) for receiving at least one temperature-control member (341, 343).

11. The pallet cover (151) as claimed in claim 8 wherein each of the central portion (244) and the first and second end portions (240, 242) of the first subassembly (153) and each of the first end portion (330) and the second end portion (332) of the second subassembly (155) comprises a plurality of pockets (191, 303) for receiving temperature-control members (205, 207, 341, 343).

12. The combination of the pallet cover (151) of claim 8 and a thermal insulation wrap (391), the thermal insulation wrap (391) being removably inserted over the pallet cover (151).

13. The pallet cover (151) as claimed in claim 11 wherein each of the first end portion (240) of the first subassembly (153), the central portion (244) of the first subassembly (153), the second end portion (242) of the first subassembly (153), the first end portion (330) of the second subassembly (155), and the second end portion (332) of the second subassembly (155) comprises a plurality of temperature-control members (205, 207, 341, 343), with one of the plurality of temperature-control members (205, 207, 341, 343) being mounted within each of the plurality of pockets (191, 303) and wherein at least some of said plurality of temperature-control members (205, 207, 341, 343) within each plurality of pockets (191, 303) are of a first of two different varieties of temperature-control members (205, 341) and at least some of said plurality of temperature-control members (205, 207, 341, 343) within each of the plurality of pockets (191, 303) are of a second of two different varieties of temperature-control members (207, 343).

14. The pallet cover (151) as claimed in claim 13 wherein the first of said two different varieties of temperature-control members (205, 341) comprises a uniform distribution of phase-change material and wherein the second of said two different varieties of temperature-control members (207, 343) comprises an alternating pattern of phase-change material and an insulating material, with phase-change material disposed at opposite ends of the temperature-control member (205, 207, 341, 343) and optionally wherein each of the central portion (244) and the first and second end portions (240, 242) of the first subassembly (153) and each of the first end portion (330) and the second end portion (332) of the second subassembly (155) comprises two end pockets (191-1, 191-6, 191-7, 191-12, 191-13, 191-18, 303-1, 303-6, 303-7, 303-12) for receiving temperature-control members (205-1 through 205-6, 341-1 through 341-4) and at least one intermediate pocket (191-2 through 191-5, 191-8 through 191-11, 191-14 through 191-17, 303-2 through 303-5, 303-8 through 303-11) for receiving temperature-control members (207-1 through 207-12, 343-1 through 343-8), wherein the first of said two different varieties of temperature-control members (205-1 through 205-6, 341-1 through 341-4) is disposed in each of the two end pockets (191-1, 191-6, 191-7, 191-12, 191-13, 191-18, 303-1, 303-6, 303-7, 303-12) and wherein the second of said two different varieties of temperature-control members (207-1 through 207-12, 343-1 through 343-8) is disposed in each of the at least one intermediate pocket (191-2 through 191-5, 191-8 through 191-11, 191-14 through 191-17, 303-2 through 303-5, 303-8 through 303-11).

## Patentansprüche

1. Palettenabdeckung (151) geeignet für die Verwendung zum Abdecken mindestens eines Teils einer Nutzlast (P) auf einer Palette, wobei die Palettenabdeckung (151) umfasst:
(a) eine obere Wand (244, 334);
(b) eine Vorderwand (240);
(c) eine Rückwand (242);
(d) eine linke Seitenwand (330); und
(e) eine rechte Seitenwand (332), worin wenigstens eine der genannten oberen Wand (244, 334), der genannten Vorderwand (240), der genannten Rückwand (242), der genannten linken Seitenwand (330) und der genannten rechten Seitenwand (332) eine Vielzahl von Taschen (191-1 bis 191-18, 303-1 bis 303-12) umfasst, die zur Aufnahme eines Temperaturregelelements geeignet sind,
**dadurch gekennzeichnet, dass**
wenigstens eine der genannten oberen Wand (244, 334), der genannten Vorderwand (240), der genannten Rückwand (242), der genannten linken Seitenwand (330) und der genannten rechten Seitenwand (332) weiterhin einen ersten Typ von Temperaturregelelement (205-1 bis 205-6, 341-1 bis 341-4), der in einer ersten Tasche (191-1, 191-6, 191-7, 191-12, 191-13, 191-18, 303-1, 303-6, 303-7, 303-12) der genannten Vielzahl von Taschen angeordnet ist und einen zweiten Typ von Temperaturregelelement (207-1 bis 207-12, 343-1 bis 343-8) umfasst, der in einer zweiten Tasche (191-2 bis 191-5,191-8 bis 191-11,191-14 bis 191-17, 303-2 bis 303-5, 303-8 bis 303-11) der genannten Vielzahl von Taschen angeordnet ist, worin der erste Typ von Temperaturregelelement (205-1 bis 205-6, 341-1 bis 341-4) eine erste Vielzahl von Beuteln (213, 215-1, 251-2, 353, 355-1 bis 355-3) umfasst, die Phasenwechselmaterial enthalten, wobei sich die erste Vielzahl von Beuteln (213, 215-1, 251-2, 353, 355-1 bis 355-3) im Wesentlichen über die erste Tasche (191-1, 191-6, 191-7, 191-12, 191-13, 191-18, 303-1, 303-6, 303-7, 303-12) erstreckt und worin der zweite Typ von Temperaturregelelement (207-1 bis 207-12, 343-1 bis 343-8) eine zweite Vielzahl von Beuteln (223-1 bis 223-3, 373-1 bis 373-3) umfasst, jeder der zweiten Vielzahl von Beuteln Phasenwechselmaterial enthält, wobei mindestens einige der zweiten Vielzahl von Beuteln (223-1 bis 223-3, 373-1 bis 373-3) innerhalb der zweiten Tasche (191-2 bis 191-5, 191-8 bis 191-11, 191-14 bis 191 - 17, 303-2 bis 303-5, 303-8 bis 303-11) durch einen oder mehrere Abstandshalter (225-1, 225-2, 375-1, 375-2) voneinander getrennt sind, wobei der eine oder mehrere Abstandshalter ein oder mehrere Stücke Isolierung sind.

2. Palettenabdeckung (151), wie in Anspruch 1 beansprucht, worin der erste Typ von Temperaturregelelement (205-1 bis 205-6, 341-1 bis 341-4) weiterhin einen ersten Träger (211, 351) und ein erstes Umhüllungsmaterial (217, 357) umfasst, worin die erste Vielzahl von Beuteln (213, 215-1, 251-2, 353, 355-1 bis 355-3) auf dem ersten Träger (211, 351) positioniert ist und worin das erste Umhüllungsmaterial (217, 357) um die erste Vielzahl von Beuteln (213, 215-1, 251-2, 353, 355-1 bis 355-3) und den ersten Träger (211, 351) gewickelt ist und worin optional der zweite Typ von Temperaturregelelement (207-1 bis 207-12, 343-1 bis 343-8) weiterhin einen zweiten Träger (221, 371) und ein zweites Umhüllungsmaterial (227, 377) umfasst, worin die zweite Vielzahl von Beuteln (223-1 bis 223-3, 373-1 bis 373-3) und der eine oder mehrere Abstandshalter (225-1, 225-2, 375-1, 375-2) auf dem zweiten Träger (221, 371) positioniert sind, und worin das zweite Umhüllungsmaterial (227, 377) um die zweite Vielzahl von Taschen (223-1 bis 223-3, 373-1 bis 373-3), den einen oder mehrere Abstandshalter (225-1, 225-2, 375-1, 375-2) und den zweiten Träger (221, 371) gewickelt ist.

3. Palettenabdeckung (151), wie in Anspruch 1 beansprucht, worin der erste Typ von Temperaturregelelement (205-1 bis 205-6, 341-1 bis 341-4) ein einziges Phasenwechselmaterial umfasst, worin der zweite Typ von Temperaturregelelement (207-1 bis 207-12, 343-1 bis 343-8) ein einziges Phasenwechselmaterial umfasst und worin der erste Typ von Temperaturregelelement (205-1 bis 205-6, 341-1 bis 341-4) und der zweite Typ von Temperaturregelelement (207-1 bis 207-12, 343-1 bis 343-8) das gleiche Phasenwechselmaterial umfassen oder worin mindestens ein Beutel der ersten Vielzahl von Beuteln (213, 215-1, 251-2, 353, 355-1 bis 355-3) und der zweiten Vielzahl von Beuteln (223-1 bis 223-3,373-1 bis 373-3) ein anderes Phasenwechselmaterial als mindestens ein anderer Beutel der ersten Vielzahl von Beuteln (213, 215-1, 251-2, 353, 355-1 bis 355-3) und der zweiten Vielzahl von Beuteln (223-1 bis 223-3,373- 1 bis 373-3) enthält.

4. Palettenabdeckung (151), wie in Anspruch 1 beansprucht, worin die obere Wand (244, 334), die Vorderwand (240), die Rückwand (242), die linke Seitenwand (330) und die rechte Seitenwand (332) durch den Zusammenbau einer ersten Bauteil-Untergruppe (153) und einer zweiten Bauteil-Untergruppe (155) gebildet sind, wobei die erste Bauteil-Untergruppe (153) einen ersten zentralen Teil (244), einen ersten Endteil (240), angeordnet an einem ersten Ende des ersten zentralen Teils (244), und einen zweiten Endteil (242) umfasst, angeordnet an einem zweiten Ende des ersten zentralen Teils (244), wobei die zweite Bauteil-Untergruppe (155) einen zweiten zentralen Teil (334), einen ersten Endteil (330), angeordnet an einem ersten Ende des zweiten zentralen Teils (334), und einen zweiten Endteil (332), angeordnet an einem zweiten Ende des zweiten zentralen Teils (334), umfasst.

5. Palettenabdeckung (151), wie in Anspruch 1 beansprucht, worin jede der genannten oberen Wand (244, 334), der genannten Vorderwand (240), der genannten Rückwand (242), der genannten linken Seitenwand (330) und der genannten rechten Seitenwand (332) eine Vielzahl von Taschen (191, 303) umfasst und worin optional der erste Typ von Temperaturregelelement (205-1 bis 205-6, 341-1 bis 341-4) innerhalb mindestens einiger der Taschen angeordnet ist und wobei der zweite Typ von Temperaturregelelement (207-1 bis 207-12, 343-1 bis 343-8) innerhalb der verbleibenden Taschen angeordnet ist.

6. Palettenabdeckung (151), wie in Anspruch 1 beansprucht, worin ein Ende jeder Tasche (191, 303) versiegelt ist und ein anderes Ende jeder Tasche so konstruiert ist, dass es reversibel geöffnet und geschlossen werden kann.

7. Palettenabdeckung (151), wie in Anspruch 1 beansprucht, worin wenigstens eine der genannten Vorderwand (240), der genannten Rückwand (242), der genannten linken Seitenwand (330) und der genannten rechten Seitenwand (332) in der Länge einstellbar ist.

8. Palettenabdeckung (151), wie in Anspruch 4 beansprucht, worin jeweils der erste Endteil (240) der ersten Bauteil-Untergruppe (153), der zweite Endteil (242) der ersten Bauteil-Untergruppe (153), der zentrale Teil (244) der ersten Bauteil-Untergruppe (153), der erste Endteil (330) der zweiten Bauteil-Untergruppe (155) und der zweite Endteil (332) der zweiten Bauteil-Untergruppe (155) mindestens ein Temperaturregelelement (205, 207, 341, 343) umfasst und worin der zentrale Teil (334) der zweiten Bauteil-Untergruppe (155) ohne Temperaturregelelement ist; und worin der zentrale Teil (334) der zweiten Bauteil-Untergruppe (155) über dem zentralen Teil (244) der ersten Bauteil-Untergruppe (153) angebracht ist und worin der erste und zweite Endteil (240, 242) der ersten Bauteil-Untergruppe (153) relativ zu dem ersten und zweiten Endteil (330, 332) der zweiten Bauteil-Untergruppe (155) versetzt ist, wobei, wenn die Palettenabdeckung (151) über eine Nutzlast auf einer Palette positioniert ist, sind die zentralen Teile (244, 334) der ersten und zweiten Bauteil-Untergruppen (153, 155) im Wesentlichen über der Oberseite der Nutzlast positioniert und die ersten und zweiten Endteile (240, 242, 330, 332) der ersten und zweiten Bauteil-Untergruppen (153, 155) sind im Wesentlichen entlang der Seiten der Nutzlast positioniert.

9. Palettenabdeckung (151), wie in Anspruch 8 beansprucht, worin die erste Bauteil-Untergruppe (153) und die zweite Bauteil-Untergruppe (155) lösbar miteinander verbunden sind und worin optional der erste Endteil (240) der ersten Bauteil-Untergruppe (153) lösbar mit jedem der ersten und zweiten Endteile (330, 332) der zweiten Bauteil-Untergruppe (155), vorzugsweise mit komplementären Klettverschlüssen (201 -1, 201-2, 321-1, 321-2), verbunden ist und der zweite Endteil (242) der ersten Bauteil-Untergruppe (153) lösbar mit jedem der ersten und zweiten Endteile (330, 332) der zweiten Bauteil-Untergruppe (155), vorzugsweise mit komplementären Klettverschlüssen (201-3, 201-4, 323-1, 323-2) verbunden ist.

10. Palettenabdeckung (151), wie in Anspruch 8 beansprucht, worin die erste Bauteil-Untergruppe (153) eine erstes Paar Bahnen (161, 163) umfasst, wobei das erste Paar Bahnen (161, 163) derart miteinander verbunden ist, um darin den zentralen Teil (244), den ersten Endteil (240), den zweiten Endteil (242) und mindestens eine Tasche (191) in jeweils dem zentralen Teil (244), dem ersten Endteil (240) und dem zweiten Endteil (242) zur Aufnahme von mindestens einem Temperaturregelelement (205, 207) zu definieren, und worin optional die zweite Bauteil-Untergruppe (155) ein zweites Paar Bahnen (261, 263) umfasst, wobei das zweite Paar Bahnen (261, 263) derart miteinander verbunden ist, um darin den zentralen Teil (334), den ersten Endteil (330), den zweiten Endteil (332) und mindestens eine Tasche (303) in dem ersten Endteil (330) und dem zweiten Endteil (332) zur Aufnahme von mindestens einem Temperaturregelelement (341,343), zu definieren.

11. Palettenabdeckung (151), wie in Anspruch 8 beansprucht, worin jeweils der zentrale Teil (244) und der erste und zweite Endteil (240, 242) der ersten Bauteil-Untergruppe (153) und jeweils der erste Endteil (330) und der zweite Endteil (332) der zweiten Bauteil-Untergruppe (155) eine Vielzahl von Taschen (191, 303) für die Aufnahme von Temperaturregelelementen (205, 207, 341, 343) umfassen.

12. Kombination der Palettenabdeckung (151) nach Anspruch 8 und einer Wärmeisolierungshülle (391), wobei die Wärmeisolierungshülle (391) entfernbar über der Palettenabdeckung (151) aufgesteckt ist.

13. Palettenabdeckung (151), wie in Anspruch 11 beansprucht, worin jeweils das erste Endteil (240) der ersten Bauteil-Untergruppe (153), der zentrale Teil (244) der ersten Bauteil-Untergruppe (153), der zweite Endteil (242) der ersten Bauteil-Untergruppe (153), der erste Endteil (330) der zweiten Bauteil-Untergruppe (155) und der zweite Endteil (332) der zweiten Bauteil-Untergruppe (155) eine Vielzahl von Temperaturregelelementen (205, 207, 341, 343) umfasst, wobei eines der Vielzahl von Temperaturregelelementen (205, 207, 341, 343) in jeweils einer der Vielzahl von Taschen (191, 303) angebracht ist und worin mindestens einige der genannten Vielzahl von Temperaturregelelementen (205, 207, 341, 343) innerhalb jeder Vielzahl von Taschen (191, 303) einer ersten von zwei unterschiedlichen Arten von Temperaturregelelementen (205, 341) angehören und mindestens einige der genannten Vielzahl von Temperaturregelelementen (205, 207, 341, 343) innerhalb jeder Vielzahl von Taschen (191, 303) einer zweiten von zwei unterschiedlichen Arten von Temperaturregelelementen (207, 343) angehören.

14. Palettenabdeckung (151), wie in Anspruch 13 beansprucht, worin die erste der genannten zwei unterschiedlichen Arten von Temperaturregelelementen (205, 341) eine gleichmäßige Verteilung von Phasenwechselmaterial umfasst und worin die zweite der genannten zwei unterschiedlichen Arten von Temperaturregelelementen (207, 343) ein alternierendes Muster von Phasenwechselmaterial und einem Isoliermaterial umfasst, wobei das Phasenwechselmaterial an gegenüberliegenden Enden des Temperaturregelelements (205, 207,341, 343) angeordnet ist, und optional, worin jeweils der zentrale Teil (244) und die ersten und zweiten Endteile (240, 242) der ersten Bauteil-Untergruppe (153) und jeweils der erste Endteil (330) und der zweite Endteil (332) der zweiten Bauteil-Untergruppe (155) zwei Endtaschen (191-1,191-6,191-7, 191-12, 191-13, 191-18, 303-1, 303-6, 303-7, 303-12) zur Aufnahme von Temperaturregelelementen (205-1 bis 205-6, 341-1 bis 341-4) und mindestens eine dazwischenliegende Tasche (191-2 bis 191-5, 191-8 bis 191-11, 191-14 bis 191-17, 303-2 bis 303-5, 303-8 bis 303-11) zur Aufnahme von Temperaturregelelementen (207-1 bis 207-12, 343-1 bis 343-8) umfasst, wobei die erste der genannten zwei unterschiedlichen Arten von Temperaturregelelementen (205-1 bis 205-6, 341 -1 bis 341-4) in jeder der beiden Endtaschen (191-1, 191-6, 191-7, 191-12, 191-13, 191-18, 303-1, 303-6, 303-7, 303-12) angeordnet ist, und worin die zweite der genannten zwei unterschiedlichen Arten von Temperaturregelelementen (207-1 bis 207-12, 343-1 bis 343-8) in jeder der mindestens einen dazwischenliegenden Taschen (191-2 bis 191-5, 191-8 bis 191-11, 191-14 bis 191-17, 303-2 bis 303-5, 303-8 bis 303-11) angeordnet ist.

## Revendications

1. Une housse de palette (151) appropriée pour être utilisée de façon à recouvrir au moins une partie d'une charge utile (P) sur une palette, la housse de palette (151) comprenant :
(a) une paroi supérieure (244, 334) ;
(b) une paroi avant (240) ;
(c) une paroi arrière (242) ;
(d) une paroi latérale gauche (330) ; et
(e) une paroi latérale droite (332), au moins une paroi parmi ladite paroi supérieure (244, 334), ladite paroi avant (240), ladite paroi arrière (242), ladite paroi latérale gauche (330) et ladite paroi latérale droite (332) comprenant une pluralité de poches (191-1 à 191-18, 303-1 à 303-12) aptes à recevoir un élément de régulation de température,
**caractérisée en ce que**
au moins une paroi parmi ladite paroi supérieure (244, 334), ladite paroi avant (240), ladite paroi arrière (242), ladite paroi latérale gauche (330) et ladite paroi latérale droite (332) comprend en outre un premier type d'élément de régulation de température (205-1 à 205-6, 341-1 à 341-4) disposé dans une première poche (191-1, 191-6, 191-7, 191-12, 191-13, 191-18, 303-1, 303-6, 303-7, 303-12) de ladite pluralité de poches et un deuxième type d'élément de régulation de température (207-1 à 207-12, 343-1 à 343-8) disposé dans une deuxième poche (191-2 à 191-5, 191-8 à 191-11, 191-14 à 191-17, 303-2 à 303-5, 303-8 à 303-11) de ladite pluralité de poches, le premier type d'élément de régulation de température (205-1 à 205-6, 341-1 à 341-4) comprenant une première pluralité de pochettes (213, 215-1, 251-2, 353, 355-1 à 355-3) contenant un matériau à changement de phase, la première pluralité de pochettes (213, 215-1, 251-2, 353, 355-1 à 355-3) s'étendant sensiblement à travers la première poche (191-1, 191-6, 191-7, 191-12, 191-13, 191-18, 303-1, 303-6, 303-7, 303-12), et le deuxième type d'élément de régulation de température (207-1 à 207-12, 343-1 à 343-8) comprenant une deuxième pluralité de pochettes (223-1 à 223-3, 373-1 à 373-3), chaque pochette de la deuxième pluralité de pochettes contenant un matériau à changement de phase, au moins certaines des pochettes de la deuxième pluralité de pochettes (223-1 à 223-3, 373-1 à 373-3) étant séparées les unes des autres à l'intérieur de la deuxième poche (191-2 à 191-5, 191-8 à 191-11, 191-14 à 191-17, 303-2 à 303-5, 303-8 à 303-11) par une ou plusieurs entretoises (225-1, 225-2, 375-1, 375-2), la ou les entretoises étant une ou plusieurs pièces d'isolant.

2. La housse de palette (151) selon la revendication 1, dans laquelle le premier type d'élément de régulation de température (205-1 à 205-6, 341-1 à 341-4) comprend en outre un premier support (211, 351) et un premier matériau d'enveloppement (217, 357), la première pluralité de pochettes (213, 215-1, 251-2, 353, 355-1 à 355-3) étant positionnée sur le premier support (211, 351), et le premier matériau d'enveloppement (217, 357) étant enroulé autour de la première pluralité de pochettes (213, 215-1, 251-2, 353, 355-1 à 355-3) et du premier support (211, 351), et, optionnellement, le deuxième type d'élément de régulation de température (207-1 à 207-12, 343-1 à 343-8) comprend en outre un deuxième support (221, 371) et un deuxième matériau d'enveloppement (227, 377), la deuxième pluralité de pochettes (223-1 à 223-3, 373-1 à 373-3) et la ou les entretoises (225-1, 225-2, 375-1, 375-2) étant positionnées sur le deuxième support (221, 371), et le deuxième matériau d'enveloppement (227, 377) étant enroulé autour de la deuxième pluralité de pochettes (223-1 à 223-3, 373-1 à 373-3), la ou les entretoises (225-1, 225-2, 375-1, 375-2) et le deuxième support (221,371).

3. La housse de palette (151) selon la revendication 1, dans laquelle le premier type d'élément de régulation de température (205-1 à 205-6, 341-1 à 341-4) comprend un matériau à changement de phase unique, le deuxième type d'élément de régulation de température (207-1 à 207-12, 343-1 à 343-8) comprenant un matériau à changement de phase unique, et le premier type d'élément de régulation de température (205-1 à 205-6, 341-1 à 341-4) et le deuxième type d'élément de régulation de température (207-1 à 207-12, 343-1 à 343-8) comprenant le même matériau à changement de phase, ou au moins une pochette de la première pluralité de pochettes (213, 215-1, 251-2, 353, 355-1 à 355-3) et la deuxième pluralité de pochettes (223-1 à 223-3, 373-1 à 373-3) contient un matériau à changement de phase différent de celui d'au moins une autre pochette de la première pluralité de pochettes (213, 215-1, 251-2, 353, 355-1 à 355-3) et de la deuxième pluralité de pochettes (223-1 à 223-3, 373-1 à 373-3).

4. La housse de palette (151) selon la revendication 1, dans laquelle la paroi supérieure (244, 334), la paroi avant (240), la paroi arrière (242), la paroi latérale gauche (330) et la paroi latérale droite (332) sont formées par l'assemblage d'un premier sous-ensemble (153) et d'un deuxième sous-ensemble (155), le premier sous-ensemble (153) comprenant une première partie centrale (244), une première partie d'extrémité (240) disposée à une première extrémité de la première partie centrale (244), et une deuxième partie d'extrémité (242) disposée à une deuxième extrémité de la première partie centrale (244), le deuxième sous-ensemble (155) comprenant une deuxième partie centrale (334), une première partie d'extrémité (330) disposée à une première extrémité de la deuxième partie centrale (334), et une deuxième partie d'extrémité (332) disposée à une deuxième extrémité de la deuxième partie centrale (334).

5. La housse de palette (151) selon la revendication 1, dans laquelle chaque paroi parmi ladite paroi supérieure (244, 334), ladite paroi avant (240), ladite paroi arrière (242), ladite paroi latérale gauche (330) et ladite paroi latérale droite (332) comprend une pluralité de poches (191, 303), et, optionnellement, le premier type d'élément de régulation de température (205-1 à 205-6, 341-1 à 341-4) est disposé à l'intérieur d'au moins certaines des poches et le deuxième type d'élément de régulation de température (207-1 à 207-12, 343-1 à 343-8) est disposé à l'intérieur des poches restantes.

6. La housse de palette (151) selon la revendication 1, dans laquelle une extrémité de chaque poche (191, 303) est scellée et une autre extrémité de chaque poche est construite de façon à être ouverte et fermée de manière réversible.

7. La housse de palette (151) selon la revendication 1, dans laquelle au moins une paroi parmi ladite paroi avant (240), ladite paroi arrière (242), ladite paroi latérale gauche (330) et ladite paroi latérale droite (332) est réglable en longueur.

8. La housse de palette (151) selon la revendication 4, dans laquelle chacune parmi la première partie d'extrémité (240) du premier sous-ensemble (153), la deuxième partie d'extrémité (242) du premier sous-ensemble (153), la partie centrale (244) du premier sous-ensemble (153), la première partie d'extrémité (330) du deuxième sous-ensemble (155) et la deuxième partie d'extrémité (332) du deuxième sous-ensemble (155) comprennent au moins un élément de régulation de température (205, 207, 341, 343), la partie centrale (334) du deuxième sous-ensemble (155) étant dépourvue d'élément de régulation de température ; et la partie centrale (334) du deuxième sous-ensemble (155) est montée sur la partie centrale (244) du premier sous-ensemble (153) et les première et deuxième parties d'extrémité (240, 242) du premier sous-ensemble (153) sont décalées par rapport aux première et deuxième parties d'extrémité (330, 332) du deuxième sous-ensemble (155), de sorte que, lorsque le couvercle de palette (151) est positionné sur une charge utile sur une palette, les parties centrales (244, 334) du premier et du deuxième sous-ensembles (153, 155) sont positionnées sensiblement au-dessus de la charge utile et les première et deuxième parties d'extrémité (240, 242, 330, 332) des premier et deuxième sous-ensembles (153, 155) sont positionnées sensiblement le long des côtés de la charge utile.

9. La housse de palette (151) selon la revendication 8, dans laquelle le premier sous-ensemble (153) et le deuxième sous-ensemble (155) sont reliés l'un à l'autre de manière amovible et, optionnellement, la première partie d'extrémité (240) du premier sous-ensemble (153) est relié de manière amovible à chacune des première et deuxième parties d'extrémité (330, 332) du deuxième sous-ensemble (155), de préférence avec des parties de fixation auto-agrippantes complémentaires (201-1, 201-2, 321-1, 321-2), et la deuxième partie d'extrémité (242) du premier sous-ensemble (153) est reliée de manière amovible à chacune des première et deuxième parties d'extrémité (330, 332) du deuxième ensemble (155), de préférence avec des parties de fixation auto-agrippantes complémentaires (201-3, 201-4, 323-1, 323-2).

10. La housse de palette (151) selon la revendication 8, dans laquelle le premier sous-ensemble (153) comprend une première paire de feuilles (161, 163), les feuilles de la première paire de feuilles (161, 163) étant réunies l'une à l'autre de manière à définir en elles la partie centrale (244), la première partie d'extrémité (240), la deuxième partie d'extrémité (242), et au moins une poche (191) dans chacune parmi la partie centrale (244), la première partie d'extrémité (240) et la deuxième partie d'extrémité (242), pour recevoir au moins un élément de régulation de température (205, 207) et, optionnellement, le deuxième sous-ensemble (155) comprend une deuxième paire de feuilles (261, 263), les feuilles de la deuxième paire de feuilles (261, 263) étant réunies l'une à l'autre de manière à définir en elles la partie centrale (334), la première partie d'extrémité (330), la deuxième partie d'extrémité (332), et au moins une poche (303) dans chacune des premières partie d'extrémité (330) et la deuxième partie d'extrémité (332) pour recevoir au moins un élément de régulation de température (341, 343).

11. La housse de palette (151) selon la revendication 8, dans laquelle chacune parmi la partie centrale (244) et les première et deuxième parties d'extrémité (240, 242) du premier sous-ensemble (153) et chacune parmi la première partie d'extrémité (330) et la deuxième partie d'extrémité (332) du deuxième sous-ensemble (155) comprend une pluralité de poches (191, 303) pour recevoir des éléments de régulation de température (205, 207, 341, 343).

12. La combinaison de la housse de palette (151) selon la revendication 8 et d'une enveloppe d'isolation thermique (391), l'enveloppe d'isolation thermique (391) étant insérée de manière amovible sur la housse de palette (151).

13. La housse de palette (151) selon la revendication 11, dans laquelle chacune parmi la première partie d'extrémité (240) du premier sous-ensemble (153), la partie centrale (244) du premier sous-ensemble (153), la deuxième partie d'extrémité (242) du premier sous-ensemble (153), la première partie d'extrémité (330) du deuxième sous-ensemble (155) et la deuxième partie d'extrémité (332) du deuxième sous-ensemble (155) comprend une pluralité d'éléments de régulation de température (205, 207, 341, 343), avec un élément parmi la pluralité d'éléments de régulation de température (205, 207, 341, 343) montés dans chaque poche parmi la pluralité de poches (191, 303), et au moins certains éléments parmi ladite pluralité d'éléments de régulation de température (205, 207, 341, 343) à l'intérieur de chaque poche parmi la pluralité de poches (191, 303) sont d'une première de deux variétés différentes d'éléments de régulation de température (205, 341) et au moins certains éléments parmi ladite pluralité d'éléments de régulation de température (205, 207, 341, 343) à l'intérieur chaque poche parmi la pluralité de poches (191, 303) sont d'une deuxième de deux variétés différentes d'éléments de régulation de température (207, 343).

14. La housse de palette (151) selon la revendication 13, dans laquelle la première desdites deux variétés différentes d'éléments de régulation de température (205, 341) comprend une répartition uniforme de matériau à changement de phase et dans laquelle la deuxième desdites deux variétés différentes d'éléments de régulation de température (205, 341) comprend une répartition alternée de matériau à changement de phase et d'un matériau isolant, le matériau à changement de phase étant disposé aux extrémités opposées de l'élément de régulation de température (205, 207, 341, 343), et, optionnellement, chacune parmi la partie centrale (244) et les première et deuxième parties d'extrémité (240, 242) du premier sous-ensemble (153) et chacune parmi la première partie d'extrémité (330) et la deuxième partie d'extrémité (332) du deuxième sous-ensemble (155) comprend deux poches d'extrémité (191-1, 191-6, 191-7, 191-12, 191-13, 191-18, 303-1, 303-6, 303-7, 303-12) pour recevoir des éléments de régulation de température (205-1 à 205-6, 341-1 à 341-4) et au moins une poche intermédiaire (191-2 à 191-5, 191-8 à 191-11, 191-14 à 191-17, 303-2 à 303-5, 303-8 à 303-11) pour recevoir des éléments de régulation de température (207-1 à 207-12, 343-1 à 343-8), les éléments de la première desdites deux variétés différentes des éléments de régulation de température (205-1 à 205-6, 341-1 à 341-4) étant disposés dans chacune des deux poches d'extrémité (191-1, 191-6, 191-7, 191-12, 191-13, 191-18, 303-1, 303-6, 303-7, 303-12) et les éléments de la deuxième desdites deux variétés différentes d'éléments de régulation de température (207-1 à 207-12, 343-1 à 343-8) étant disposés dans chaque poche parmi au moins une poche intermédiaire (191-2 à 191-5, 191-8 à 191-11, 191-14 à 191-17, 303-2 à 303-5, 303-8 à 303-11).
